# EUROPEAN PATENT SPECIFICATION

(11) **EP 3 794 166 B1**
(45) Date of publication and mention of the grant of the patent: **29.06.2022**
(21) Application number: 19724497.3
(22) Date of filing: 16.05.2019
(51) Int. Cl.: C25C 7/02, C25C 1/12

(54) **IMPROVEMENT IN COPPER ELECTROREFINING**
VERBESSERUNG AN DER KUPFERELEKTRORAFFINIERUNG
AMÉLIORATION DE L'AFFINAGE ÉLECTROLYTIQUE DU CUIVRE

(30) Priority: 16.05.2018 EP 18172598
(43) Date of publication of application: 24.03.2021
(73) Proprietor: AURUBIS BEERSE, 2340 Beerse (BE)
(72) Inventor: DE VISSCHER, Yves, 2340 Beerse (BE); VANDEVELDE, Mark, 2340 Beerse (BE); JERROUDI, Rafik, 2340 Beerse (BE); COLETTI, Bert, 2340 Beerse (BE); GORIS, Jan, Dirk A., 2340 Beerse (BE); GEENEN, Charles, 2340 Beerse (BE)
(74) Representative: Gevers Patents
(86) International application number: PCT/EP2019/062637
(87) International publication number: WO 2019/219821

(56) References cited:
- CA-A- 1 152 943
- KR-B1- 101 844 771
- US-A- 2 286 240
- US-A- 3 753 877
- US-A- 3 875 041
- HOFFMANN J E: "THE PURIFICATION OF COPPER REFINERY ELECTROLYTE", JOM: JOURNAL OF METALS, SPRINGER NEW YORK LLC, UNITED STATES, vol. 56, no. 7, 1 July 2004 (2004-07-01), pages 30-33, XP001200025, ISSN: 1047-4838, DOI: 10.1007/S11837-004-0088-4

## Description

### FIELD OF THE INVENTION

The present invention relates to the production of copper from primary sources, meaning fresh ore, and from secondary feedstocks, also known as recyclable materials, or from combinations thereof, by means of pyrometallurgical process steps. Recyclable materials, may for instance be by-products, waste materials and end-of-life materials. More particularly, the invention relates to the further purification by electrorefining of anodes shaped from a copper stream obtained by pyrometallurgy which stream comprises impurities.

### BACKGROUND OF THE INVENTION

In the pyrometallurgical production of copper, other metals such as nickel, antimony, bismuth, tin and/or lead, often also small amounts of precious metals (PMs), in particular silver (Ag), are present in many of the feedstocks of commercial interest, including both primary as well as secondary raw materials.

Pyrometallurgical process steps are not anymore capable of economically cleaning up its copper product stream to the high purity of ≥99.97%wt which the markets nowadays typically demand, e.g. the ≥99.995%wt required for allowing the pulling of very thin copper wire for electronic applications. The production process for copper metal therefore typically includes an electrorefining step, usually as the last step in the purification process.

In the electrorefining of copper, by use of an electrical voltage difference, copper is dissolved (primarily by electrochemically induced "corrosion") from a less pure copper anode, conventionally containing about 99%wt of Cu, into an electrolyte (mainly according to Cu → Cu²⁺ + 2 e⁻) and redeposited on a cathode (primarily via Cu²⁺ + 2 e⁻ → Cu), forming a copper layer of higher purity (at least 99.97%wt of Cu and often as high as 99.99%wt of Cu). The electrolyte is usually sulphuric acid based. These two chemical (half-)reactions are characterised by a standard potential difference under ideal circumstances of 0.337 Volt.

By maintaining the voltage difference between anode and cathode within tight limits, the metal depositing on the cathode may be controlled to be almost exclusively copper. The other metals in solution should not deposit electrochemically.

In theory, because the two chemical half-reactions have opposing voltage differences, an electrorefining cell requires only a very small net voltage difference in order to operate. Due to various resistances in the overall circuit however, an electrorefining cell requires in practice a voltage difference of at least 0.15 volt (V) or 150 mV from cathode to anode in order to be operable.

The electrorefining (ER) of copper is distinctly different from the "electrowinning" (EW) of copper. With electrowinning, in a first step copper is dissolved into an acid solution by leaching the copper (strictly by chemical "corrosion") from a solid feedstock such as copper ore. The copper-loaded electrolyte, optionally after having raised the copper concentration, such as by means of extraction involving an organic solvent, is then routed through an electrolytic cell with chemically inert anodes, wherein, thanks to the electric current, the copper is deposited on the cathode. At the anode of an electrowinning cell, water is electrochemically split (2 H₂O → 4 H⁺ + O₂ + 4 e⁻), whereby the hydrogen ions (H⁺) remain in solution and the oxygen atoms collect into gas bubbles that rise to the electrolyte surface. The electrons pass through the electrical circuit from the anode to the cathode where they are made available to deposit the copper (primarily Cu²⁺ + 2 e⁻ → Cu), similar to in an ER cell. In EW, the two half-reactions are thus not their reverse and have different standard potentials, which results in the EW cell to require an absolute minimum theoretical net voltage difference of 0.892 Volt. Above this theoretical minimum then come the additional voltage differences required to overcome the overpotentials at anode and cathode, and the voltage drops associated with the contact points and the Ohm resistance of the electrolyte. The operating voltage difference over an EW cell is therefore typically significantly higher than over an ER cell, rather in the order of 1.8 to 2.5 Volt from anode to cathode.

An electrorefining cell is conventionally controlled such that a target current (A) or current density (A/m²) for the installed cathode surface is maintained through the cell, primarily in order to maintain the target cathode weight production rate. During operation however, extra electrical resistances build up, primarily in the electrolyte bath. Because the effect is particularly causing an increase in the electrical resistance at the surface of the anode, this phenomenon is often referred to as "anode passivation". Several factors may play a role, (i) anode slimes forming and building up on the anode surface and impairing the flow of copper cations from anode to cathode, (ii) erosion of the anode increasing the distance between the electrodes, (iii) by the additives that are added to the electrolyte impairing the flow of cations through the electrolyte, and (iv) yet other mechanisms. It should be added that higher current densities also accelerate the anode passivation.

In view of the usual operational target to maintain a constant current density through the cell, and hence a constant cell productivity, typically the voltage difference between cathode and anode is (automatically) raised to compensate for any increase in the electrical resistance over the cell (I = V/R).

But a higher voltage difference and/or a higher current density may also introduce other and less desired effects in an electrorefining cell, even if it only applies locally. At voltages that deviate from optimum, less desired (electro)chemical reactions may occur such that also some other metals may start to deposit on the cathode, resulting in a cathode having a lower purity and hence a lower economic value.

Primarily for reasons of cathode purity, the voltage over a copper electrorefining cell is typically kept within a particular range, typically 0.2-0.6 V, and most certainly below a particular maximum, such as not higher than 1.6 V. The voltage difference over an electrowinning cell is significantly higher than over an electrorefining cell, because the voltage difference in EW first has to overcome the standard electrode potential of 0.34 V of the copper electrochemical reaction, and secondly also has to provide the extra driving force for the electrochemical splitting of water. The voltage difference over an EW cell is therefore typically in the range of 1.8-2.5 V.

Also the current density in electrorefining is typically constrained below an upper limit, usually not more than about 400 A/m², for the same reason of cathode purity, but also for other aspects of cathode quality such as flatness, strength and toughness, and for limiting anode passivation, as explained earlier.

Metals more noble than copper, and present in much lower concentrations in the anode and/or the electrolyte, such as Pb, but also including precious metals such as Ag, Au and platinum group metals (PGMs) such as Pt and Pd, typically do not significantly go into solution. In the context of the present invention, a particular metal may be called "more noble" than the reference metal (which in this context is copper) if it has a more positive standard electrode potential (E°), i.e. the minimum voltage required to enable the electrochemical reaction "Me → Meⁿ⁺ + n e⁻". The electrical driving force is in electrorefining typically kept insufficiently high for pushing the more noble metals present in the anode into solution via the electrochemical pathway.

The applicants however make a distinction between on the one hand "electrochemical" solution, i.e. going into solution using the electrochemical pathway and hence consuming electrical power, and on the other hand purely "chemical" solution, i.e. going into solution without consuming any electrical power. Metals that may go into solution via this purely chemical route include Sn, As, Sb and Bi.

Amounts of other metals, including the electrochemically "insoluble" metals, may still dissolve by the purely "chemical" mechanism. For instance, Pb may dissolve but in presence of sulphate anions forms the salt PbSO₄ which has a very low solubility in the electrolyte, and which therefore will tend to come out of solution and form precipitating Pb compounds.

The copper around these rather "insoluble" metals dissolves, and the disappearance of the copper either leaves these metals as loose metal particles floating in the electrolyte, and because they usually have a higher density than the liquid, readily move towards the bottom of the cell, or result in the formation of a spongy film (e.g. Pb as PbSO₄, which is a solid insoluble in the electrolyte) that forms on the anode surface as this surface retreats by the continuing dissolution of more copper.

In electrowinning, no copper is dissolving at the anode. The formation of anode slime and/or of a spongy film on the anode surface are therefore problems which are hardly known in electrowinning. These problems are typical for, and substantially only occur, in electrorefining.

In the known art of electrorefining, it is preferred to have the anode slime sink through the electrolyte and to collect on the bottom of the cell as the anodes continue to dissolve, and hence retreat, and the cathodes continue to grow. When the anodes have about been consumed, all electrodes may be pulled up from the bath, the electrolyte above the anode slime may be pumped out, and the cell bottom may be cleaned by removing and recovering the anode slime. To minimize the risk that anode slime particles become encapsulated in the cathode, forming a contamination of the copper cathode, it is preferred that the anode slime particles move as fast as possible to the bottom of the cell under the gravity force. In the art of electrorefining, it is therefore typical and preferred to have only little and slow movement of the electrolyte in the cell. Turbulence in the cell tends to increase the risk that particles or salts of metals other than copper become caught in the cathode and contaminate the final product.

The anodes in the conventional electrorefining of copper have a typical copper content of at least 98%wt. In "The Purification of Copper Refinery Electrolyte", Journal of Metals (JOM), July 2004, pp. 30-33, the consultant James E. Hoffmann shows in Table I of his article the levels of Soluble Elemental impurities in Anode Copper, in ppm, for arsenic, antimony, bismuth, iron and nickel, in a variety of anode compositions he has been aware of. The numbers for individual elements may vary widely, but the total for all the listed elements together is at most 4545 ppm, or 0.45%wt. The article also states that the anode copper may also contain up to 0.3% of oxygen. Assuming that the balance in each composition is copper, this leads to the observation that the copper anode compositions disclosed by this author in this article always contain at least 99.2455%wt of copper, i.e. in line with the above statement on anode purity for conventional copper electrorefining. The article is concerned with controlling the electrolyte in a copper electrorefining operation. The article briefly discusses alternatives such as solvent extraction and ion exchange, but is mainly focussed on the treatment of a continuous bleed stream, withdrawn from the circulating electrolyte. The article is not concerned with, nor gives any details about, the electrolyte cycle itself, and how that should be operated.

Other documents have attempted to operate copper electrorefining using anodes having a lower purity.

US 2,286,240 addresses the recovery of metals involving electrorefining, starting from a typical anode comprising substantially 90% copper, 3.5% tin, 5% lead, 0.5%zinc, and the remainder other metals, such as antimony, nickel and iron. Exemplified are anodes having at most 86.0% of copper. There is no oxygen reported in any of the anodes disclosed this document. The document proposes to use an electrolyte having a sulphonic acid as principal electrolytic agent, preferably in absence of any appreciable amount of sulphuric acid or sulphates, especially when lead is present. The document is silent about the removal of anode slimes from the electrolytic cell.

DD 45843 discloses a batch copper electrorefining operation using an anode containing 90.00%wt Cu. The electrolyte inventory of 5 litre is at a temperature of 58-59°C and is circulated over the cell such that the bath is renewed every 3 hours. The electrorefining is continued until the increased concentrations of nickel sulphate, tin and/or antimony in the electrolyte turn the liquid turbid. The enriched electrolyte containing 14.63 g/l Ni is then heated to boiling temperature and treated with an oxidizing agent, such that tin and antimony may be removed as a white sludge mixture ("Weissschlammenge"), and after copper removal is evaporated to crystallize nickel as water free nickel sulphate. The anode in DD 45843 contains a high amount of undesired iron, as much as 1.00% Fe. The process of DD 45843 has the further disadvantage that the anode impurities are allowed to build up in the electrolyte during the batch, and hence run an increased risk for contaminating the cathode. DD 45843 gives no information of the quality of copper cathodes obtained.

US 4,351,705 discloses a refining process for copper-bearing material contaminated with nickel, antimony and/or tin. In a first smelter a black copper is produced containing 50-80%wt of copper. This black copper is subjected to a sequence of oxidation steps until the residual copper is of blister grade, forming a converter slag as by-product. The blister copper is further refined to anode copper containing about 98-99%wt of copper, which is cast into anodes which are then treated in an electrolytic refining step 10. Selected portions of the converter slag are smelted in a second smelting step 12 at a temperature of about 1200-1300°C under a moderately reducing atmosphere, to produce a slag residue 114 and batches of fully reduced metal product 13. The fully reduced metal products that are exemplified and that were cast into anodes, excluding those of Example 3 in which extra cobalt and nickel were added prior to casting, were comprising from 63.9-82.10%wt of copper and at least 10.50%wt of nickel. In Example 4, the anodes contained 2.0%wt of iron, and 0.5% Fe in Example 5. For the subsequent electrolysis step, these anodes were immersed into tankhouse electrolyte drawn from a blister copper electrolytic refining section, such as step 10, or into an electrolyte having a similar copper and nickel content. Average current densities of 161 A/m² and 172 A/m² were maintained over the electrolysis cells in the Examples. No anode passivation is reported. Slimes were forming during electrolysis on both the anode and the cell bottom. The electrolysis was continued up to at most 194 hrs (Example 1, 8 days), at which time the total impurity level in the cathode had risen up to 200 ppm, and cathode purity had thus dropped to 99.98%wt. The electrolyte was shown to change composition over time, i.e. its copper content significantly reduced and the nickel content increased. The slimes on the anodes and on the cell bottom were collected, in Examples 1 and 3 even separately, presumably at the end of the electrolysis run. The electrolysis of US 4,351,705 is operated in relatively short batch runs which have to be discontinued because of slime build-up, depletion of copper and build-up of nickel in the electrolyte, and an increase of the contaminant level in the cathodes produced.

In the art of electrowinning, it is standard to apply a high electrolyte circulation through and also inside the cell, because that refreshes the bulk copper concentration in the cell, keeps stagnant films on the electrodes small, thereby increasing the availability of copper cations at the cathode surfaces, and hence improves cell productivity. In addition, in an electrowinning cell, oxygen gas is forming at the anode surface, and the rising oxygen gas bubbles further enhance the liquid movement in the cell. It has become fairly typical in electrowinning to introduce a gas, usually air, into the bath and have this gas bubble through the electrolyte. This enhances the effect of gas bubbles increasing the turbulence in the electrolyte, and in addition dilutes the oxygen in the atmosphere above the electrolyte, reducing any problems that may be associated with an oxygen rich atmosphere above the electrowinning cell.

In spite of the increased risk for cathode contamination, it has been proposed in the art to introduce gas sparging through the liquid bath also in an electrorefining cell. US 1,260,830 proposes to inject sulphur dioxide gas and direct this against the face of the anode. We also refer to WO 2011/085824 A1, and to several of the documents that are cited therein. Neither WO 2011/085824 A1 nor US 4,263,120 however discuss or disclose the increased risk for cathode contamination when applying air sparging as part of an electrorefining operation.

US 3,928,152, and likewise also its family members US 3,875,041, US 4,033,839, and US RE30,005, discloses air sparging in the electrodeposition (EW) of copper at current densities in the range of 59 to 141 ampere per square foot (ASF) of cathode surface, translating into 635 to 1517 A/m², which current densities are claimed to be achievable thanks to the relatively small electrode spacing, "optimally less than one inch face to face", while the insoluble anodes are provided with convection baffles 18 on their sides and extensions 20 on their bottom, made of PVC and thus electrically insulating, in combination with the extra agitation by the air sparging. The rising air bubbles are powering an increased convection of the electrolyte at the cathode surfaces, preventing suspended particulates from lodging on the faces of the cathodes. The anode bottom extensions 20 fit into bottom racks 54. Together with the convection baffles 20, these elements maintain the reduced spacing of the insoluble anodes from the cathode blanks, of which the bottom edges are maintained in position by fitting into the bubble tube support members 56. All detailed examples in US 3,928,152 and its other family members are about electrowinning. The document submits that its gas agitation system has been extensively tested under electrorefining conditions, whereby anode passivation did not occur even at current densities as high as 300 ASF, allegedly fully forestalled thanks to the high electrolyte convection, and the cathode deposits were allegedly uncontaminated by suspended anode slimes. There is no information provided in US 3,928,152 or in its other family members about the quality of the soluble copper anodes used during these undescribed electrorefining operations, nor about the refresh rate of the electrolyte in the cell. There is also no mention of measures to be taken to avoid copper depletion in the electrolyte or excessive build-up of anode slimes. It must therefore be concluded that the anodes were of a conventional quality, typically containing at least 98.5%wt of copper, which makes it acceptable to the applicants that no anode passivation was observed in spite of the high current densities.

Many of the anode impurities that go into solution, e.g. Ni, Fe, Co and Mn, have the tendency to increase the density and the viscosity of the electrolyte, which affects the mass and heat transfer mechanisms in the electrolytic cell, for instance the movement of the copper cations and the settling rate of the heavy anode slime particles towards the bottom of the bath. Iron (Fe) in particular is an element that, in solution, increases the density and viscosity of the electrolyte, thereby raising the resistance that copper cations need to overcome on their way to the cathode, and the resistance that anode slimes need to overcome on their way to the bottom of the cell.

As the anodes contain more impurities, the formation of the spongy film over the anode surface may become an increasing factor in causing "anode passivation", i.e. the formation of an extra hurdle/resistance which the Cu cations need to overcome in their pathway from anode surface to cathode surface. For maintaining the desired current density through the cell, the voltage over the cell increases as the anode passivation becomes more important. The spongy film may also break up into metal particles which may collect by gravity on the bottom of the electrolytic cell if they are sufficiently heavy, as part of what is called the anode sludge or anode slimes. Heavy anode slime particles may thus form a dusty cloud that builds up from the bottom of the cell.

The particles that should be collecting into the anode slime, on their way down to the bottom of the cell, travel along the electrodes and may become included into the cathodes as impurities. They disturb the crystal raster of the Cu, and may cause uneven cathode surface growth and subsequent dendrite growth leading to short circuiting and thus decreased productivity.

It is clear that a higher level of other metal contaminants in the copper anodes may enhance the above described problems: the anode passivation problem may occur and increase faster, hence the voltage over the cell will be raised faster and the cathode impurity level may reach faster its maximum allowable level.

A maximum allowable voltage over the cell may however be imposed, for instance because of cathode purity constraints. Other limiting factors may be the heat generation in the cell, which may cause thermal strains and even cracks in the cell walls, and/or the melting or failure of electrical isolation paths.

A need therefore remains for a process wherein these problems are alleviated. The present invention is therefore concerned with the allowance of higher impurity levels in the copper anodes, i.e. of lower purity copper anodes, resulting in a relaxation of the upstream process parameters and feedstock allowance criteria, while maintaining the production of acceptable copper cathode quality at an acceptable and economically attractive yield, while keeping the cell productivity high.

C. Anderson et al., "The application of copper metallurgy in the recovery of secondary precious metals", Proceedings of Copper 99 - Cobre 99 International Conference, Volume III - Electrorefining and Electrowinning of Copper, The Minerals, Metals & Materials Society, 1999, pp. 529-543, describe three electrorefining tests in a 1 litre cell starting from anodes containing less than 75.0%wt of copper and more than 0.8%wt of precious metals (Ag, Au, Pd, Pt). The target was to demonstrate the recovery of copper into saleable copper cathodes while recovering all the precious metals in the anode slimes. It may be assumed that the 1 litre cell volume relates to the volume of the empty cell, before any electrodes have been introduced. During all the tests, the 3 litre total electrolyte inventory was circulated at a flow rate of 330 ml/minute, or 19.8 litre/hour, over the 1 litre cell and a holding jar with heating, driven by a pump. The document does not specify when and where the anode slime by-product of any of the tests was collected, separated, weighed and analysed. In view of the high electrolyte refresh rate of 1980% per hour (= 19.8 l/h : 1 I * 100%) over the cell, it is highly unlikely that any anode slime was given a chance to settle in the cell itself. Some anode slime may have collected in the holding jar during the test, but more likely the anode slime has been circulating continuously throughout the entire test with the electrolyte, until at the end of each test the full electrolyte inventory was drained and/or collected and the anode slime was allowed to settle. Most likely, the anode slime was thus recovered only at the end of an electrorefining operating cycle. The tests used current densities of at most 173.65 A/m². A first problem with the electrorefining operation described in this article is that the electrolyte refresh rate is high, and thus also the liquid flow through the cell, which makes it very difficult to maintain the prescribed electrode distances in the cell and avoid the risk of short-circuiting by adjacent electrodes making physical contact. A second problem of the described electrorefining operation is the low electrical current density, which represents a rather low cell productivity. The document states that no anode passivation was observed during the last test of only 3 days which operated at the higher current density of 173.65 A/m². This observation of lacking anode passivation, in spite of the high level of impurities present in the anodes, is most likely explainable because of the very high refreshing rate and the low current density that were applied.

The present invention aims to obviate or at least mitigate the above described problem and/or to provide improvements generally.

### SUMMARY OF THE INVENTION

According to the invention, there is provided a process for copper electrorefining and a composition for copper anode service as defined in any of the accompanying claims.

In an embodiment, the present invention provides a process for the production of copper comprising the electrorefining of copper metal in an electrolytic bath from at least one copper anode into at least one copper cathode, using an electrolyte that is sulphuric acid based, characterised in that
- the voltage difference between the anode and the cathode in the electrolytic cell is maintained at less than 1.6 volt,
- the anode comprises at most 98.0%wt of copper,
- the anode comprises less than 1.00%wt of iron,
- the current density through the cell is at least 180 A/m² of cathode surface,
- electrolyte is removed from the electrorefining cell during the electrorefining operation, at an average electrolyte refreshing rate of at least 30 % and at most 1900 % per hour, and the electrolyte is removed at least partly by overflow of a first stream of electrolyte over at least one cell wall, and
- a gas is introduced into the cell and bubbled through the electrolyte in between the anode and the cathode.

In another embodiment, the present invention provides for a molten liquid metal composition, which is suitable for being made suitable for copper anode electrorefining in the process according to the present invention and comprising at least 90.10%wt and at most 97%wt of copper, the balance being other elements as impurities, as part of which the molten liquid metal composition comprises
- at least 0.1%wt of nickel,
- at least 0.0001%wt and less than 1.00%wt of iron, and
- at least 250 ppm wt and at most 3000 ppm wt of oxygen.

The impurities in the metal composition according to the present invention are primarily other metals, oxygen and optionally also sulphur and/or phosphorus. With metals are in the context of the present invention primarily meant the elements that are located in the IUPAC Periodic Table of the Elements dated 22 June 2007 left of and including the elements carbon, silicon, selenium, tellurium, and polonium. The most frequently occurring impurities in the metal composition according to the present invention are selected from the group consisting of nickel, antimony, tin, lead, bismuth, arsenic, zinc, iron, selenium, tellurium, silver, gold, platinum, palladium, oxygen, sulphur and phosphorus.

The applicants have found that the metal composition according to the present invention brings the benefit of providing the metal composition which, preferably after reducing the oxygen content of the composition down to a level as preferred in the context of the present invention, is suitable for casting anodes for an electrorefining process according to the present invention that may be operated with a conventional electrolytic cycle, provided that a number of extra measures are taken. The applicants have found that the extra measures provided as part of the process according to the present invention are sufficient in order to control the problems associated with the lower purity and the higher impurity level of the anode material, e.g. when the anode is made from the metal composition according to the present invention, preferably after reducing its oxygen content as prescribed.

The applicants have found that the compliance of the oxygen content within the prescribed upper and lower limit is in particular important if the metal composition according to the present invention is produced by a series of pyrometallurgical process steps, and in which the last production step produces a liquid bath consisting of a heavy molten liquid metal phase in equilibrium with a supernatant liquid slag phase, as described in our co-pending patent application PCT/EP2018/084374 filed on 11 December 2018. The applicants have found that excessive oxygen levels, i.e. above the upper limit as specified, helps increasing the copper content of the molten liquid copper metal phase intended for casting the anodes, but thereby also causes too much of the other valuable metals to end up in the slag phase. In particular nickel, in the presence of an abundancy of copper and with the excessively high oxygen levels, is prone to oxidise and to end up in the slag phase. This nickel may then be lost in an end slag of the overall process, at zero value and possibly even causing disposal problems. In addition, most of the tin, antimony and/or lead will have the tendency under those conditions to follow the path of the nickel. The nickel and other metals may be recoverable from that slag, but then need to find another way out from the overall process. Because nickel has a high tendency to behave fairly similar to copper in metallurgical processes, the desire to find another way out for nickel than accompanied with copper represents a dire task, if not impossible. The applicants have found that by controlling the oxygen level as specified, that in particular nickel may leave the upstream metallurgical process as an impurity of the anode of the process according to the present invention.

The applicants have found that the control of the oxygen level in the molten liquid metal composition according to the present invention within the levels as specified brings the advantage that a significant amount of nickel may be accommodated as part of the molten liquid metal composition according to the present invention, whereby most of this amount of nickel may be recovered downstream of the electrolysis step of the process according to the present invention, and be converted into economic value. This brings the advantage that the upstream metallurgical process steps are able to accept significant amounts of nickel containing feedstocks, i.e. feedstocks that are more difficult to process by a conventional copper production process, and which typically produce as anode material a high purity copper, such as "blister" copper, containing more than 98.0%wt of Cu.

An excessive level of oxygen in the anode was found to increase the risk for malformation of the anode surfaces after casting and upon cooling. Without wanting to be bound by this theory, the applicants believe that excessive oxygen presence may, in a late stage of solidification, lead to local formation of gas bubbles underneath the anode surface, and the pressure in these gas bubbles generates distortions on the surface deviating from an ideally flat surface. These deviations are undesired in view of the desire to work with low electrode spacing distances. The applicants therefore prefer to respect the upper limit on oxygen in the anode composition of the process according to the present invention.

An excessive level of oxygen in the anode also means that more copper is present in the anode as copper(I) oxide, which dissolves into the electrolyte according to the chemical path, and adds to the copper level therein. Recovery of this copper is usually performed by an extra electrowinning step on the electrolyte bleed stream, which is complex and represents a significant extra burden. High levels of oxygen in the anode also promote anode passivation, in particular at high current densities, as described by C.A.Möller et al in "Effect of As, Sb, Bi and Oxygen in Copper Anodes During Electrorefining", Proceedings of Copper 2010, pp. 1495-1510.

The applicants have thus found that it is advantageous for a number of reasons to keep the oxygen level in the molten liquid metal composition according to the present invention within the levels as specified, especially in combination with the level of non-copper impurities in the composition, in particular with nickel present. One such good reason is that less oxygen in the molten liquid metal composition leads to less gas pockets in the anodes that are cast from it. As a result, the anode surfaces are smoother and the anodes are flatter, both elements that improve the alignment of the anodes in the cell and bring a more uniform distance between the electrodes in the cell during the electrorefining operation. The applicants have found that it is readily possible to reduce the oxygen level by known means, such as "poling", further down to the levels preferred by the process according to the present invention, thereby converting metal oxides into elemental metal, in particular converting the copper oxide into copper metal, the latter readily electrochemically dissolving in the electrolyte and transferring to the cathode in the process according to the present invention.

The applicants have found that the molten liquid metal composition according to the present invention is the preferred outlet for nickel in the upstream pyrometallurgical process steps producing the molten liquid metal composition according to the present invention. The nickel is readily acceptable in the process according to the present invention because it concentrates in the electrolyte and a bleed stream may be withdrawn from the electrolyte cycle and its nickel content may selectively be recovered and upgraded to elemental nickel.

In "The Purification of Copper Refinery Electrolyte", JOM, July 2004, pp. 30-33, James E. Hoffmann describes a number of practices to control the composition of electrolyte in a copper electrorefining operation, primarily by treating such a bleed stream withdrawn from the electrolyte cycle. The impurities discussed include Sb, Bi, As, Ni, Ca, ammonia, and organic fragments generated from hydrolysis of conventional cathode growth-modifying addition agents. As already discussed above, the level of impurities in the soluble copper anodes in this article are low, and the copper purity of the anodes in this article are far above the levels specified as part of the present invention.

The applicants have found that the behaviour of nickel in the electrolysis cycle is fairly unique amongst the metal impurities that may be present in significant concentrations in the molten liquid metal composition according to the present invention, as well as in the composition of the anode in the process according to the present invention. The applicants have found that nickel is able to dissolve in the sulphuric acid based electrolyte as nickel sulphate, and to build up to interestingly high concentrations before this salt may cause operational problems and/or cathode quality concerns. The applicants have also found that the nickel in the electrolyte may be fairly readily recoverable from the electrolyte, preferably from a bleed stream that is withdrawn from the electrolyte cycle, and that this nickel may readily be upgraded to commercial value. The applicants have found that the nickel may be recovered and upgraded while simultaneously also most of the copper dissolved in the withdrawn electrolyte may be recovered and upgraded, and the acid may be recycled to the electrorefining.

The applicants have found that this method of recovery and upgrade of nickel represents a preferred method for providing an outlet for nickel that is entering an upstream pyrometallurgical process for producing the molten liquid metal composition according to the present invention and/or the anode for the process according to the present invention.

The allowance of significant levels of nickel in the molten liquid metal composition according to the present invention and/or in the anode for the process according to the present invention widens the acceptance criteria for the feedstocks into the upstream copper refining process producing the metal composition. This brings the advantage that the operator of the upstream process is able to accept in more significant quantities raw materials having high nickel contents, and that for this reason may be less acceptable, or acceptable only in limited quantities, to operators of other processes that are not linked to the process according to the present invention. Such raw materials may thus be available at more attractive conditions and quantities than raw materials containing less nickel.

The applicants have found that the higher levels of nickel in the electrolyte resulting from a higher level of nickel in the molten liquid metal composition according to the present invention and/or in the anode for the process according to the present invention, and hence also in the electrolyte that is withdrawn from the electrolyte cycle for nickel recovery, improves the effectiveness and the efficiency of the nickel recovery and upgrade steps, because more nickel may be recovered and upgraded in smaller equipment and with a lower consumption of energy and/or process chemicals.

The applicants have also found that there is a significant advantage in limiting the iron content of the anodes as specified. The applicants have found that dissolved iron in the electrolyte brings significant energy inefficiencies in that they cause part of the electrical current through the cell to not contribute to the transfer from copper cations from anode to cathode. Without wanting to be bound by this theory, the applicants believe that iron cations in the electrolyte are readily able to change valence, presumably by the half-reaction Fe²⁺ -> Fe³⁺ + e⁻ occurring at the anode, and after the Fe³⁺ cation having moved to the cathode, the reversed half-reaction Fe³⁺ + e⁻ -> Fe²⁺ at the cathode, upon which the Fe²⁺ cation is able to return to the anode. This mechanism could explain the observation, with significant amounts of iron in the electrolyte, that a part of the electrical current may pass through the cell without contributing to the transfer of copper cations. This part of the electrical current therefore represents a non-productive use of a costly resource.

The applicants have also found, due to iron in the anodes, and hence also in the electrolyte, that an extra but non-contributing electrical current is needed to maintain equal copper cathode productivity, which increases the problems that the present invention is addressing and solving. The increased current causes the voltage over the cell to increase, and also to rise faster, which results in increased levels of contaminants in the cathode and leads to reaching the maximum allowable level faster, as explained before in this document. The higher current also generates more heat in the cell, and possibly hotspots, which causes other problems described elsewhere in this document. It also forces the current density up higher for the same copper productivity, which raises its contribution to cathode contamination as explained further below.

Iron, when it dissolves from the anode into the electrolyte, increases the density and the viscosity of the electrolyte, which affects the mass and heat transfer mechanisms in the electrolytic cell, for instance the movement of the copper cations on their way to the cathode and the settling rate of the heavy anode slime particles towards the bottom of the bath. High Fe content in the anode, and thus also in the electrolyte, raises the resistance that copper cations need to overcome on their way to the cathode, and the resistance that anode slimes need to overcome on their way to the bottom of the cell.

It is for this reason that the anodes in the process according to the present invention, as well as the molten liquid metal composition according to the present invention, should comprise iron at a level that is below the prescribed upper limit.

The molten liquid metal composition according to the present invention, and preferably also the copper anode in the process according to the present invention, optionally comprises at least 0.0001%wt of iron, preferably at least 0.0005%wt, more preferably at least 0.0010%wt, even more preferably at least 0.0025%wt, preferably at least 0.0050%wt, more preferably at least 0.0075%wt, even more preferably at least 0.010%wt, preferably at least 0.015%wt, more preferably at least 0.020%wt, even more preferably at least 0.025%wt of iron. The applicants have found that it is not necessary to remove iron in the anode composition and/or the molten liquid metal composition according to the present invention to levels below the detection limit of 1 ppm wt, but that it is advantageous to leave small amounts of iron. This relaxes the constraints, severity and the operating burdens of the upstream process steps where the metal is produced which forms the basis for the anodes of the process according to the present invention. It should therefore be noted that the lower limit for the iron content prescribed for the molten liquid metal composition according to the present invention, as well as prescribed for the composition of the copper anode used in the process according to the present invention, is not an essential feature of the invention that would be required to obtain the desired result. It has no technical relation with the technical effects upon which the current invention is based. Respecting the lower limit is preferred because of the associated advantages, which are located upstream of the electrorefining step.

The applicants submit that pyrometallurgical processes that produce liquid molten copper products suitable for being casted into electrorefining anodes, typically use iron metal as a reducing agent and/or as an energy source. The presence of a measurable amount of iron in the molten liquid metal composition according to the present invention and/or in the anode composition of the process, such as specified, is therefore a useful marker that indicates that the composition and/or anode has been made by a pyrometallurgical process and was not the result of synthetically, usually on a laboratory scale, bringing together pure copper with other metals in high purity in order to obtain an anode having a particularly desired composition for experimental purposes and tightly controlled testing.

The applicants have found that the electrorefining of copper anodes which are lower in copper, and thus contain high levels of contaminants, typically other metals, and this at the high current densities as specified, is becoming more and more problematic as the level of impurities in the anode increases, because the anode contaminants and the high current densities cooperate in worsening the problem of anode passivation. The applicants have found that this problem may be solved by the features of the present invention, in particular in combination with each other.

The applicants have found that the introduction of gas and the bubbling of this gas through the electrolyte in between the anode and the cathode, and in this electrorefining operation preferably at the anode side of the gap, results in an enhanced electrolyte agitation. Provided this gas introduction is properly performed, as described further down in this document, it achieves this effect locally, in between the electrodes where its impact is the greatest, while it hardly affects the liquid flows elsewhere in the cell, e.g. at the bottom of the cell where a significant part of the anode slimes are collecting. This enhanced liquid agitation in the first place enhances the physical transport of the Cu²⁺ cations from the anode to the cathode by convection. It achieves this by an increased turbulence in the liquid between the electrodes, accelerating the transport by convection, but also by reducing the diffusion boundary layer at the anode and/or cathode surface, which is stagnant and through which the transport is by diffusion. A further advantage is a more homogeneous distribution of the temperature and of the concentration of any process chemicals throughout the cell, which also improves the homogeneity of the current distribution. The effects bring the advantage of enabling a high cell productivity while allowing to maintain a lower cell voltage difference and obtaining a higher purity cathode, as compared to without or with less bath agitation. The lower cell voltage difference brings the benefit of a lower power consumption for the same product yield.

Without wanting to be bound by this theory, the applicants believe that this is due to physically reducing and mechanically breaking down the spongy film that is continuously built on the anode surface, and by an enhanced homogenisation of the electrolyte concentration in terms of the levels of copper and/or the contaminant metals, of the temperature, and of the additives. This reduces the risk for local "hot spots" in the bath with respect to any of these parameters.

Such hot spots in terms of temperature and/or of concentrations of copper, impurity metals and additives, may be harmful. Contaminant metals may locally build up and raise the voltage, over the cell or even locally between a particular pair of electrodes or between different spots on the same electrode, and hence may decrease cell productivity as well as cathode quality. Shortage of copper at the cathode end may reduce the deposition rate. Local hot spots of a soluble metal such as nickel may lead to local deposits of salts of such metal. Local temperature excursions may cause damage to cell walls and/or to the isolation paths providing electrical isolation in between different cell parts or elements. Local temperature excursions may also accelerate deterioration of some of the process chemicals or additives, and may even lead to cathode pre-stripping, i.e. the premature release, already during electrorefining, of the cathode copper layer from its substrate. This pre-stripping readily leads to short circuiting and production loss.

The applicants submit that the prescribed upper limit on the presence of iron in the anode contributes to the advantages discussed here, such as the lower voltage, lower power consumption, and the lower occurrence of hot spots. Limiting iron in the electrolyte increases the current efficiency and enhances the mass and heat transfer through the electrolyte.

The applicants have found that the feature specifying that the electrolyte removal rate from the electrolytic cell should comply with the specified lower limit further contributes to an increase of the bath agitation. This further enhances the benefits discussed above in association with the introduction and bubbling of a gas through the electrolytic bath.

The applicants have found that the high electrolyte velocities in the bath, caused by the high removal rate of electrolyte from the bath, and/or by the extra turbulence that is brought by the gas bubbling through the bath, brings surprisingly significant effects because it is limiting the build-up and hence the thickness of any spongy film and/or the risk for deposition of a slime particle on the surface of anode and/or cathode. The applicants have observed that the spongy film is fairly brittle, and believe that the gas bubbling may also impact mechanically on the spongy film. The applicants believe that the high liquid velocities in the electrolyte also strongly contribute to breaking down the spongy film on the anode, and also to moving the suspended particles of anode slime away from the electrodes.

The high removal rate of the electrolyte from the bath also limits the build-up of solid particles in the electrolyte present in the space in between anode and cathode. The high removal rate offers the opportunity to remove at least a part of formed anode slime particles from the removed electrolyte before returning the cleaned electrolyte back to the electrorefining cell as part of the present invention. The features of the present invention were found to significantly limit the effect of "anode passivation", as explained elsewhere in this document.

The electrolyte that is removed from the electrorefining cell contains suspended particles of anode slimes. While heavy anode slime particles may still readily come down through the electrolyte, contrary to the movement of the gas bubbles through the electrolyte, lighter anode slime particles may not settle that readily and may more likely tend to move up towards the surface, where they are entrained and removed from the cell by the electrolyte overflow. The high removal rate of the electrolyte thus also represents a high removal rate of at least a part of the lighter anode slimes. This brings the advantage of a high removal rate of anode slimes from the cell. This brings the advantage that the total amount of anode slimes that is able to build up in the cell over time remains limited. By frequently or continuously removing anode slimes, such as by entrainment with the removed electrolyte, it is less likely that contaminant metals are built into the cathodes. Another advantage of having access to the anode slimes more frequently than only at the end of an electrorefining campaign, thus only after the anodes have become exhausted, is that the anode slimes availability is spread over a wider period of time. This brings the advantage that any further processing of the anode slimes may be spread more equally over time, bringing benefits of smaller equipment size and lower investment cost, combined with a simpler operation and the planning thereof, even up to the point that the anode slime processing may be operated in continuous mode. A further advantage is, because of the significant value that these anode slimes may represent, to a large extent due to the presence of PMs including PGMs, that the improved access to the anode slimes reduces the amount of working capital that may - on average - be tied up in the continuous inventory of anode slime in the operating facilities.

The applicants have however found that an excessively high electrolyte flow through the electrorefining cell may create other problems. Conventionally the anodes and cathodes are hanging loose and strictly vertical under their own weight, side-by-side and in an alternating order in the cell at their design distance from their closest neighbours. The physical distance between anode and cathode surfaces sets the distance that cations have to travel through the electrolyte. The resistance this physical flow of cations is encountering through the electrolyte is an important element in the overall electrical resistance over the cell, and hence a significant contributor to the voltage difference that is required to overcome the overall electrical resistance and to assure the desired current density and hence cell productivity. Physical movement or dislocation of electrodes in the cell may result in the electrode distance not anymore being uniform, resulting in uneven current density distribution, locally increased cathode growth rate and locally inappropriate additive level, hence in reduced cathode quality. The adjacent electrodes should also not come into physical contact with each other, because that represents an electrical short-circuit. A short-circuit between an anode and a cathode in electrorefining removes the electric potential difference between the two, which is the driving force for the electrolysis, and hence stops the electrochemical solution at the anode as well as the copper deposition at the cathode, and this while a lot of electrical power is converted into local heat dissipation, which may even lead to the two electrodes becoming strongly interconnected.

Liquid movement in the cell may push one electrode to move closer to its neighbour, and hence generate the problems described above, including an increased risk for physical contact. This concern is made more complex because the metal growth on a cathode may be unequal. Dendrites may form, which may stick out perpendicular to the cathode surface. But also at the anode surface inequalities may form, such as the spongy film described elsewhere in this document. The electrode distance for which a particular electrolytic cell is designed is therefore usually an acceptable balance between on the one hand the desire to reduce the required potential difference over the cell, and on the other hand the desire to limit the risk for physical contact between adjacent electrodes and hence short-circuiting throughout the time of a full electrolytic cycle. The electrodes more prone to movement because of electrolyte movement in electrorefining are in particular the cathodes at the start of an electrolytic cycle and/or closest to the electrolyte inlet, because they are at their lightest weight and/or may encounter the higher liquid flow pressure. Similarly the anodes at the end of the cycle, hence called the spent anodes, also represent a significant risk because of their reduced weight.

It has been proposed in the art, also in some of the documents discussed above, to limit the electrode movement in an electrolytic cell by physical means, such as by guides against cell wall or bottom in which the electrodes fit when lowered into the electrolytic cell. A problem however is that the metal growth on the cathode may fix the cathode to the guide or rack, such that at the end of the electrolytic cycle it becomes difficult or even impossible to release the cathode from the guides and/or racks in the cell. The problem becomes even more problematic in electrorefining when the starting anodes are less pure, i.e. when there is more anode slime formed and more spongy film that may form on the anode surface, and also because there are more contaminate particulates available that may risk to become encapsulated in the cathode. The cathode surface may grow unevenly, and the cathode growth may preferably continue on those protrusions, because of the reduced distance to the anode, thereby forming "dendrites" that growingly extend from the rest of the cathode surface. In particular when the anodes are relatively rich in tin and antimony, there may be forming Sn/Sb intermetallic compounds and/or oxides, that tend to grow strongly on the cell walls and side strips of the blanks and impair the release of the finished cathode from any connections or clamps provided to the cell wall or bottom.

Another problem associated with the provision of guides or clamps for limiting the electrode movement vs the cell wall or bottom is that these provisions hinder the removal of heavy anode slime from the cell, in particular when one prefers to perform this during the electrolytic cycle. These electrode guides may form obstructions for the movement of e.g. a suction head for sludge extraction from the cell bottom. Any physical fixture to the bottom of the cell prohibits the extraction of sludge from the cell unless it is first removed. And vertical electrode guides along the cell walls are possible obstructions for any horizontal wall fixtures to guide the suction head for sludge extraction. The possibilities to provide electrode guides are therefore limited in combination with a provision for removing heavy anode slimes during the electrolytic cycle.

The applicants have found that the electrorefining process according to the present invention, due to the high impurity level of the anodes, is limiting the options for providing guides for limiting electrode movement in the cell. The purpose of the upper limit which is specified for the electrolyte removal rate from the cell in the process according to the present invention is therefore to limit the electrode movement during operation and hence the risk for short-circuiting, while at the same time avoiding the need for an extensive provision of physical electrode guides, such as along cell walls or on the cell bottom, in a way that the sludge extraction is not impaired. Limiting the electrolyte refreshing rate in the cell also saves on investment and operating cost for the equipment and energy required for the electrolyte circulation.

The applicants have thus found that electrorefining may successfully be operated to produce high quality cathodes starting from lower purity anodes provided gas is introduced and bubbled through the electrolyte and the electrolyte flow through the electrolytic cell is sufficiently high to control the concentration of the lighter anode slime in the cell, yet remains sufficiently low such that electrode movement caused by the pressure of the liquid flow remains low and obviates the need to provide physical guides for limiting the electrode movement, such that the extraction of heavy anode slime from the cell is not impaired.

The present invention thus reduces the negative effects on cathode quality that may be caused by an increased level of impurities in the copper anodes. As a result, the present invention allows the processing of less pure copper anodes, i.e. anodes having a significantly higher level of impurities.

The applicants have found that the process according to the present invention significantly relaxes the purity requirements of the copper stream that may be suitable for casting into anodes that may further be refined into commercial high purity grade copper cathodes via electrorefining. The process according to the present invention allows much higher contaminant metal concentrations in the anodes as compared to the state of the art. This means that the upstream process by which the anodes are produced, may operate at a lower severity, e.g. with less stringent quality constraints, which may bring a benefit of a higher productivity.

The applicants have found that the process according to the present invention allows to obtain this benefit without any significant compromise with respect to the recovery of copper into the copper cathode.

The applicants have further found that the process according to the present invention allows to obtain this benefit while limiting the amount of other metals ending up in the copper cathode to commercially acceptable levels.

The applicants have further found that the process according to the present invention opens the optional possibility for recovering as much as possible of many of the metal contaminants in the anode metal, which includes Bi, Sn, Pb, As and Sb, but also precious metals such as Ag, Au, Pd, Pt, as part of the anode slime by-product.

The applicants have further found that the process according to the present invention opens the optional possibility for recovering as much as possible of any nickel that may be present in the anode metal from the electrolyte.

The benefits of the relaxed quality requirements for the anode metal are that (a) the upstream pyrometallurgical steps for copper recovery may accept feedstocks having a much lower purity and/or that the operating window for producing a refined copper suitable for the electrorefining step is broadened, and (b) the composition restrictions imposed on the raw materials that are considered acceptable for these upstream copper recovery by pyrometallurgical steps are relaxed.

The present invention therefore also brings the advantages of (a) broadening the acceptable quality requirements for the feedstocks of the upstream pyrometallurgical process steps, such that feedstocks may be processed which are more heavily contaminated with the listed metals, and hence may be more readily available at economically more advantageous conditions, and (b) reducing operating problems and expenses in the upstream pyrometallurgical steps for producing a refined copper stream that is suitable for electrorefining copper from less Cu-rich raw materials.

The present invention was found to bring these advantages while maintaining the advantages of an electrorefining operation that is able to operate with long anode renewal cycles, with a high productivity and at a high current density and low energy consumption. The applicants have found that the process according to the present invention may be provided such that it only needs to be interrupted for replacing the anodes, but, as will be explained further in this document, that the electrolyte concentration may be well controlled, as well as the anode slime build-up in the cell and in the electrolyte, and that even cathodes may be replaced while the electrolysis is kept operating.

The invention obtains this objective by reducing the effect of anode passivation and of the contaminant build-up in the electrolyte. Other advantages, such as the possible selective recovery of Ni from Cu, and of other metals via the anode slimes, are also obtained.

### BRIEF DESCRIPTION OF THE DRAWINGS

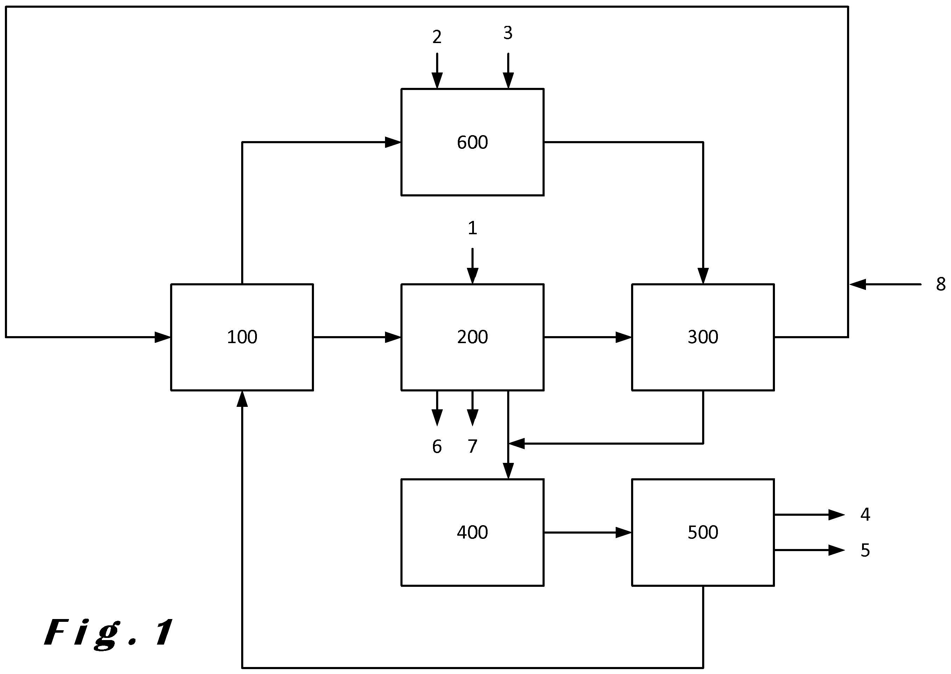

Figure 1 shows a flow diagram of the core part of an embodiment of the process according to the present invention.

### DETAILED DESCRIPTION

The present invention will hereinafter be described in particular embodiments, and with possible reference to particular drawings, but the invention is not limited thereto, but only by the claims. Any drawings described are only schematic and are non-limiting. In the drawings, the size of some of the elements may be exaggerated and not drawn to scale for illustrative purposes. The dimensions and the relative dimensions in the drawings do not necessarily correspond to actual reductions to practice of the invention.

Furthermore, the terms first, second, third and the like in the description and in the claims, are used for distinguishing between similar elements and not necessarily for describing a sequential or chronological order. The terms are interchangeable under appropriate circumstances and the embodiments of the invention can operate in other sequences than those described and/or illustrated herein.

Moreover, the terms top, bottom, over, under and the like in the description and the claims are used for descriptive purposes and not necessarily for describing relative positions. The terms so used are interchangeable under appropriate circumstances and the embodiments of the invention described herein may operate in other orientations than described or illustrated herein.

The term "comprising", as used in the claims, should not be considered as being limited to the elements that are listed in context with it. It does not exclude that there are other elements or steps. It should be considered as the presence provided of these features, integers, steps or components as required, but does not preclude the presence or addition of one or more other features, integers, steps or components, or groups thereof. Thus, the volume of "an article comprising means A and B" may not be limited to an object which is composed solely of agents A and B. It means that A and B are the only elements of interest to the subject matter in connection with the present invention. In accordance with this, the terms "comprise" or "embed" enclose also the more restrictive terms "consisting essentially of" and "consist of". By replacing "comprise" or "include" with "consist of" these terms therefore represent the basis of preferred but narrowed embodiments, which are also provided as part of the content of this document with regard to the present invention.

Unless specified otherwise, all values provided herein include up to and including the endpoints given, and the values of the constituents or components of the compositions are expressed in weight percent or % by weight of each ingredient in the composition.

Additionally, each compound used herein may be discussed interchangeably with respect to its chemical formula, chemical name, abbreviation, etc..

The present invention is directed to the electrorefining of copper, i.e. the purification of a copper stream containing impurities, in particular other metals, from which anodes are made, into copper cathodes having a higher copper purity. This is significantly different from the electrowinning of copper. In the hydrometallurgical recovery of copper from ores or other feedstocks, metals are leached from the starting solid into a liquid leaching solution, dissolving the metals by means of strong acid solutions (such as sulphuric acid, hydrochloric acid). In the downstream copper electrowinning step, copper may be recovered from the liquid leaching solution, or from a concentrate derived therefrom, by selectively pushing the copper cations out of solution and depositing the copper on a cathode, under the driving force of an electric voltage difference between the cathode and a chemically inert anode, usually made of lead, at which surface water is electrochemically split into oxygen gas (O₂, escaping from the cell) and protons (H⁺) which stay in solution. For each proton formed, one electron is released. These electrons pass through the electric circuit from the anode to the cathode, and are picked up at the cathode for the deposition of copper metal (primarily by the reaction Cu²⁺ + 2 e⁻ → Cu), similar to what happens at the cathode during electrorefining.

Because electrowinning has to also split water into oxygen and protons, it has been explained before in this document that the theoretically minimum required voltage difference over a copper electrowinning cell is significantly higher than for a copper electrorefining cell. The practical voltage difference over a copper electrowinning cell is therefore at least 1.6 V, and in practice differences in the range of 1.6-2.5 Volt are practised in order to overcome also the extra resistances in the electrowinning electrolyte.

In the context of the present invention, by electrolyte refreshing rate of an electrolytic cell is meant the electrolyte removal rate in percent relative to the liquid volume of the empty electrolytic cell per unit of time, usually per hour. With an empty electrolytic cell is meant the amount of liquid the cell may contain when it is still empty, i.e. the cell before any of the electrodes or other elements or submerged ancillaries are introduced, such as guides for electrodes and/or suction mouths, and/or manifolds and/or distributors for incoming and/or outgoing fluids, gas and/or liquid. The refreshing rate as defined in the context of the present invention is the refreshing rate of the electrolytic cell, albeit of one or more cells belonging to the same electrorefining unit, and therefore is totally independent of the volume of any bleed stream that is typically continuously withdrawn from the circulating electrolyte, which some may consider to represent also a "refreshing rate", but then relative to the electrolyte cycle as a whole, and which has no connection whatsoever with the refreshing rate defined in the context of the present invention.

The prescriptions for the refreshing rate in the context of the present invention relate to the average refreshing rate throughout an entire electrolytic cycle, i.e. the operating period between two subsequent anode replacements. We shall discuss further in this document that more than one single stream of electrolyte may be removed from the cell, and that such a removal stream does not necessarily need to be continuous, but may also be discontinuous. It may therefore be that, during particular periods of operation, the removal rate of electrolyte from the cell may be significantly increased periodically. The prescription for the average refreshing rate in the context of this invention is therefore the average over the entire electrolytic cycle, including any periods during which the electrolyte removal rate is higher. The time period for the average refreshing rate relates to operating time only, i.e. time that the cell is at least partially in operating mode with the electrical current passing through the cell.

In an embodiment of the present invention, the voltage difference between the cathode and the anode in the electrolytic cell is at most 1.5 V, preferably at most 1.4 V, more preferably at most 1.3 V, even more preferably at most 1.2 V, preferably at most 1.1 V, more preferably at most 1.0 V, even more preferably at most 0.9 V, preferably at most 0.88 V, more preferably at most 0.85 V, even more preferably at most 0.83 V, preferably at most 0.80 V, more preferably at most 0.7 V, even more preferably at most 0.6 volt. Preferably the prescribed upper voltage limit is respected throughout a full electrolytic cycle, including the end of the cycle when the anodes have become substantially exhausted and are up for replacement, and the voltage over the cell is usually the highest. The applicants prefer to maintain the cell voltage below the prescribed upper limit because that reduces the cathode contamination and improves cathode quality, while it reduces the risk for excessive resistance build-up in the cell, which may lead to temperature rises which may cause thermal stresses, additive breakdown, and other undesired effects.

In an embodiment of the present invention, the anode comprises at most 97.5%wt of copper, preferably at most 97.0%wt, more preferably at most 96.5%wt, even more preferably at most 96.0%wt, preferably at most 95.5%wt, more preferably at most 95.0%wt, even more preferably at most 94.5%wt, preferably at most 94.0%wt, more preferably at most 93.5%wt, even more preferably at most 93.0%wt, preferably at most 92.5%wt, more preferably at most 92.0%wt, even more preferably at most 91.5%wt of copper. The applicants have found that several of the benefits of the present invention become even more significant when the anodes are less pure, i.e. leave more room for metals other than copper. For instance, this widens the acceptance quality requirements for the feedstocks of the upstream pyrometallurgical process steps as well as the operating window for the upstream pyrometallurgical steps by which the anode metal is produced.

In an embodiment of the present invention, the anode and/or the molten liquid metal composition according to the present invention comprises at most 0.90%wt of iron, preferably at most 0.80%wt, more preferably at most 0.70%wt, even more preferably at most 0.60%wt, preferably at most 0.50%wt, more preferably at most 0.40%wt, even more preferably at most 0.30%wt, preferably at most 0.25%wt, more preferably at most 0.20%wt, even more preferably at most 0.15%wt, preferably at most 0.10%wt, even more preferably at most 0.050%wt of iron. This brings the advantage that the electrolyte will also contain less iron, and that the problems which are associated with the presence of iron cations in the electrolyte are easier to keep of reduced importance, up to a point of being acceptable, or even become close to absent.

In an embodiment of the present invention, the current density through the cell is at least 190 A/m², preferably at least 200 A/m², more preferably at least 210 A/m², even more preferably at least 220 A/m², preferably at least 230 A/m², more preferably at least 240 A/m², even more preferably at least 250 A/m², preferably at least 260 A/m², more preferably at least 270 A/m², even more preferably at least 280 A/m². A higher current density through the cell typically brings the advantage that the productivity of the cell is increased, in particular if the contribution of the current to the transfer of copper cations is maintained high, and the part of the current that is used by mechanisms that do not contribute to the transfer of copper cations from anode to cathode is kept low, e.g. by keeping the amount of iron cations in the electrolyte low, such as by using anodes comprising iron at a level below the prescribed limit.

In an embodiment of the present invention, the current density through the cell is at most 400 A/m², preferably at most 390 A/m², more preferably at most 380 A/m², even more preferably at most 370 A/m², preferably at most 360 A/m², more preferably at most 350 A/m², even more preferably at most 340 A/m², preferably at most 330 A/m², more preferably at most 320 A/m², even more preferably at most 310 A/m², preferably at most 300 A/m², more preferably at most 290 A/m², even more preferably at most 280 A/m². The applicants have found that respecting the prescribed upper limit for the current density through the cell brings the advantage that the problems that are increased by a higher current density are kept manageable and that the advantageous effects of the present invention are more readily obtained. These problems have been described elsewhere in this document, and anode passivation is a prime example of such a problem.

In an embodiment of the present invention, the electrolyte is removed from the cell at an average refreshing rate of more than 30%, preferably at least 35%, more preferably at least 40%, even more preferably at least 45%, preferably at least 50%, more preferably at least 55%, even more preferably at least 60% per hour, preferably at least 70%, more preferably at least 75%, even more preferably at least 80%, preferably at least 85%, more preferably at least 90%, even more preferably at least 95%, preferably at least 100%, more preferably at least 105%, even more preferably at least 110% per hour. The refreshing rate, and its average, is as defined above. The refreshing rate as specified is only accounting for the volume of the first stream of electrolyte which is leaving the cell by overflow. Any other stream of electrolyte leaving the cell, such as the second stream of electrolyte containing anode slimes which is introduced later in this document, is in addition to the first stream refreshing rate. The applicants have found that a higher refreshing rate of electrolyte is a strong contributor in controlling the amount of anode slime in the cell. This is a significant contributing element in keeping the cathode quality high, in spite of high levels of impurities in the anodes. It further brings other advantages, such as a faster access to the valuable anode slime for further upgrading. A higher refreshing rate also contributes to an increased agitation in the liquid bath inside the electrolytic cell. The higher liquid flows may bring some degree of liquid turbulence by themselves, at least locally, over and above the contribution of the gas introduction and bubbling, and therefore do help in reducing the thickness of the stagnant liquid films that inevitably form on the surfaces of anode and/or cathode, and facilitate the movement of copper cations from anode to cathode. Thanks to the upper limit of iron specified for the anode composition, the higher refreshing rate does not significantly increase any burden caused by iron cations in the electrolyte.

In an embodiment of the present invention, the electrolyte is removed from the cell at an average refreshing rate of at most 1700% per hour, preferably at most 1500%, more preferably at most 1200%, even more preferably at most 1000%, preferably at most 800%, more preferably at most 600%, even more preferably at most 400%, preferably at most 300%, more preferably at most 290%, even more preferably at most 250%, preferably at most 200%, more preferably at most 175%, even more preferably at most 150%, preferably at most 125% per hour. The applicants have found that compliance with the prescribed upper limit for the refreshing rate of electrolyte brings the advantage that the liquid pressure on the electrodes may remain limited. This brings the advantage that it may not be necessary to provide guides for all electrodes in the bath to limit electrode movement in the cell and to maintain the distance between adjacent electrodes within close limits from the desired (and usually design) values. Limiting the electrolyte refreshing rate below the specified upper limit brings the advantage that heavy anode slimes are given more chance to settle on the bottom of the cell, from which they may be removed during operation as explained further in this document.

In an embodiment of the present invention, the amount of gas introduced into the cell and bubbled through the electrolyte between the anode and the cathode is at least an effective amount, i.e. an amount that is effective in resulting in enhanced electrolyte agitation. An effective amount of gas achieves a noticeable reduction of the cell voltage at the desired current density as compared to the voltage established without any gas introduction. The gas needs to be supplied at a pressure which is at least sufficient to overcome the hydrostatic pressure represented by the column of liquid in the cell above the introduction level of the gas, and preferably higher. The applicants prefer to apply a pressure that is at least 0.1 bar above this minimum required pressure, preferably at least 0.3 bar, more preferably at least 0.5 bar above the hydrostatic pressure, together with a plurality of flow restrictions, such as small holes or nozzles, through which the gas is sparged into the cell, such that a pressure drop is established over flow restrictions and the gas flow is better distributed over the plurality of flow restrictions, and therefore the resulting gas bubbles are also more evenly distributed over the cell.

In an embodiment of the present invention, the metal composition comprises at least 90.5%wt of copper, preferably at least 91.0%wt, more preferably at least 91.5%wt, preferably at least 92.0%wt, more preferably at least 92.5%wt, even more preferably at least 93.0%wt of copper.

Preferably the molten liquid metal composition according to the present invention is also complying, where possible, with the concentration limits prescribed for the anode composition as part of the process according to the present invention, preferably also with the preferred concentration limits for the anode composition but with the exception of the oxygen content. The benefits associated with these concentration features prescribed for the molten liquid metal composition in accordance with the present invention are the same as described in the context of the anode composition as part of the process according to the present invention.

In an embodiment, the molten liquid metal composition according to the present invention comprises at least 0.25%wt of nickel, preferably at least 0.50%wt, more preferably at least 0.75%wt, even more preferably at least 1.00%wt, preferably at least 1.25%wt, more preferably at least 1.50%wt, even more preferably at least 2.00%wt, preferably at least 2.10%wt, more preferably at least 2.25%wt, even more preferably at least 2.50%wt of nickel. A higher nickel level in the metal composition allows the upstream process to accept more feedstocks that contain significant amounts of nickel. Such feedstocks are difficult to handle for most electrorefining operations, and are therefore more readily available at economically more favourable conditions. Optionally the metal composition comprises at most 10.0%wt of nickel, preferably at most 9.0%wt, more preferably at most 8.0%wt, even more preferably at most 7.00%wt, preferably at most 6.00%wt, more preferably at most 5.50%wt, preferably at most 5.00%wt, more preferably at most 4.50%wt, preferably at most 4.00% wt, more preferably at most 3.50%wt of nickel. At lower levels of nickel in the anode composition, the bleed stream may be kept smaller, which simplifies its further processing and the associated operating costs. Lower levels of nickel also reduce the need for adding extra copper cations into the electrolyte. Less nickel also reduces the anode passivation, which allows the measures taken to cope with anode passivation to be operated at a lower severity and/or intensity.

The applicants have found that it is important to have the oxygen content of the molten liquid metal composition in accordance with the present invention in compliance with the upper limit as specified, preferably less than 3000 ppm wt, more preferably at most 2800 ppm wt, even more preferably at most 2600 ppm wt, preferably at most 2500 ppm wt, more preferably at most 2400 ppm wt, even more preferably at most 2300 ppm wt, more preferably at most 2200 ppm wt, even more preferably at most 2100 ppm wt, preferably at most 2000 ppm wt, more preferably at most 1800 ppm wt, even more preferably at most 1600 ppm wt, yet more preferably at most 1400 ppm wt. On the other hand, the applicants submit that it is also important to maintain the oxygen content in compliance with the lower limit as specified, preferably at least 300 ppm wt, more preferably at least 400 ppm wt, even more preferably at least 500 ppm wt, yet more preferably at least 600 ppm wt, preferably at least 700 ppm wt, more preferably at least 800 ppm wt, even more preferably at least 1000 ppm wt, preferably at least 1250 ppm wt, more preferably at least 1500 ppm wt, even more preferably at least 1750 ppm wt, yet more preferably at least 2000 ppm wt.

In an embodiment of the present invention, the anode comprises at least 75.0%wt of copper, preferably at least 77.5%wt, more preferably at least 80.0%wt, even more preferably at least 82.5%wt, preferably at least 85.0%wt, more preferably at least 87.5%wt, even more preferably at least 90.0%wt, preferably more than 90%wt, more preferably at least 91.0%wt, even more preferably at least 91.5%wt, preferably at least 92.0%wt, more preferably at least 92.5%wt, even more preferably at least 93.0%wt of copper. This brings the advantage that the copper production of the cell is higher, and that the measures that are implemented for alleviating the problems brought by anode impurities are easier to provide and to control. It thus brings the advantage of less anode slimes to be removed and processed, lower anode passivation, as well as a higher cathode quality, both in terms of composition as with respect to the physical aspects and ease of stripping.

In an embodiment of the present invention, at least part of the anode slimes in the cell are removed from the cell with the first stream of electrolyte. The applicants have found that the first stream of electrolyte via the overflow of electrolyte over a cell wall is highly suitable for entraining a part of the anode slimes, which are continuously being generated during the electrolytic cycle due to a number of reasons, primarily the impurities in the anode, as explained above. The applicants have found that it are primarily the lower density and thus lighter slime particles that are more readily entrained with the first stream of electrolyte.

In an embodiment of the present invention, the flow of the first stream of electrolyte is kept positive throughout the electrolytic cycle. The applicants prefer to maintain a positive liquid overflow ongoing all throughout the full electrolytic cycle, such that at all times during the electrorefining operation, the cell is maintained full of liquid. This reduces and possibly avoids the risks associated with a loss of liquid level in an electrolytic cell, when it becomes possible that electric arcs are pulled, such as in between naked electrodes or between an electrode and the overhead crane above the cell, which may cause equipment damage or represent safety hazards.

In an embodiment of the present invention, the cell wall having the overflow of the first stream of electrolyte is a side wall which crosses the planes of the largest surfaces of the electrodes, preferably the cell having a rectangular footprint (or horizontal layout) and the side wall having the overflow running about perpendicular to the orientation of the electrodes. Such side wall is usually the longest as compared to the cell head walls, which brings the advantage that the liquid flows per unit of cell wall length in the overflow may be made lower. This feature also brings the advantage that the current direction of the electrolyte leaving the cell via the overflow has a reduced impact on the electrode surfaces, which reduces the risk that the electrodes move as a result of the outgoing electrolyte flow. Preferably the current direction of the outgoing electrolyte is parallel to the electrode surfaces, and the sideways pressure of the outgoing electrolyte current on the electrodes may be substantially inexistent. For this reason, the applicants prefer to have the electrolyte overflowing substantially over the entire length of at least one cell side wall, possibly interrupted intermittently over limited distances for passing construction elements for supporting any cell overhead structure. The applicants have further found that this feature brings the advantage of a more homogeneous distribution of the additives in the electrolyte throughout the entire cell, as compared to feeding the electrolyte at one head end of the cell and having the overflow at the opposite head end of the cell, i.e. a setup in which all the electrolyte is passing the full length of the cell and the additive concentration gradually drops because of consumption from feed to outlet. The concentration of these additives is usually controlled at the inlet point for the electrolyte to the cell. Because these additives are gradually consumed and/or broken down at the cathode surfaces, as the electrolyte moves through the cell from inlet to outlet, this setup of the electrolyte overflow improves the distribution of these additives over the bath.

In an embodiment of the present invention, the first stream of electrolyte is passed through at least one settler providing a sufficiently high residence time at a sufficiently low liquid velocity for anode slimes to settle on the bottom of the settler. The applicants have found that a settler is highly suitable for collecting and removing a major portion of the anode slimes entrained in the cell overflow stream before this electrolyte may be recycled to the electrolytic cell. This removal step of anode slime from the electrolyte overflow, especially when the cleaned electrolyte is recycled, is a first step in controlling the anode slime concentration in the electrolytic cell, in particular of the fine and/or light anode slime particles that are being formed during the electrolytic cycle. It is a strong contributor in allowing the anodes to contain higher levels of impurities. The applicants prefer to provide a plurality of settlers.

In an embodiment, a flocculant is added to the electrolyte on its way to the settler. This facilitates the coagulation of particles and the settling of the anode slimes on the bottom of the settler. This brings the further advantage that less fine anode slimes are recycled to the electrolytic cell, thereby improving the control of the presence of anode slimes in the cell, and hence also the quality of the cathodes produced.

In an embodiment of the present invention wherein the process comprises the settler on the first stream of electrolyte, a third stream of electrolyte containing anode slimes is removed from the bottom of the settler. The generation of this third stream of electrolyte is a second step in controlling the anode slime concentration in the electrolytic cell, in particular of the fine and/or light anode slime particles that are being formed during the electrolytic cycle. This second step allows for a continuous operation of the settler, which facilitates its operation and at the same time allows a more frequent access to the anode slimes collecting on the bottom of the settler, with the associated benefits discussed elsewhere in this document with respect to more ready access to anode slimes. The applicants prefer to generate this third stream of electrolyte containing anode slimes intermittently from the same settler. By allowing time for building up a layer of anode slimes on the bottom of the settler, the third stream of electrolyte may be richer in anode slimes, and its further processing may be more effective, simple, efficient and rewarding.

In an embodiment of the present invention, a second stream of electrolyte containing anode slimes is removed from the bottom of at least one electrolytic cell. The applicants have found that a part of the anode slimes succeed in sinking towards the bottom of the cell and in reaching the space in the cell below the level at which the gas is introduced. In this lower region, the liquid is moving much less, and the anode slime particles reaching this region readily form a layer of electrolyte on the bottom of the cell that is highly rich in anode slimes. The applicants prefer to also remove this anode slime, by withdrawing the second stream of electrolyte containing anode slimes from the bottom of the electrolytic cell.

In an embodiment of the present invention, the second stream of electrolyte is removed during the electrorefining operation from a bottom section of the cell provided below the electrodes for collecting anode slime. The applicants have found that it is advantageous to remove the second stream from the cell during the electrolytic cycle, and more preferably while the electrorefining is in operating mode, i.e. with the electrical current passing through the cell. The applicants have found that it is possible to remove the second stream from the cell while the cell is in full operation. This brings the advantage compared to many of the processes described in the art that the cell does not need to be taken out of service for removing the anode slime layer collecting on the bottom of the cell, and that it is easier to control the presence of anode slimes in the cell throughout the electrolytic cycle. The applicants prefer to provide in the cell a space below the electrodes, more preferably also below any equipment provided for introducing gas into the cell. In this bottom space the liquid flows slower and with less turbulence, because of the absence of gas bubbles. The applicants prefer to provide the electrolyte supply to the cell at a level that is above this bottom section, such that also the shortest liquid path between this liquid inlet point and the electrolyte overflow over the at least one cell wall does not pass, and thus hardly disturbs, the bottom space provided for collecting the heavy part of the anode slime that is formed.

In an embodiment of the present invention, the second and/or the third stream of electrolyte containing anode slimes is sucked from the bottom of the cell and/or from the bottom of the settler, preferably by a suction head moving over the bottom of the cell and/or settler. The applicants, preferably at regular intervals during the electrolytic cycle and while the electrolytic cell is in operating mode, pass a suction mouth through the cell in a space that is provided below the electrodes, also below any equipment provided for introducing gas into the cell, but above a space that is provided in the bottom section of the cell for collecting the anode slimes particles.

A suitable method for removing the second and/or third stream of electrolyte containing anode slimes is by sucking the stream by means of a suction mouth that is moved over the bottom of the cell and/or settler, preferably above the space provided for collecting the anode slime layer. A suitable method for this feature is described in WO 00/79025 A1.

The applicants prefer to remove the bottom layer of anode slimes in the cell before the top of the layer reaches the level in the cell at which the gas is introduced, preferably before the top of the layer reaches the level at which the suction mouth is moved through the cell for sucking up the second stream of electrolyte from the bottom of the cell, preferably rich in anode slimes.

The applicants prefer to also provide similar facilities and precautions in the settlers through which the first stream of electrolyte is passing, its anode slimes are supposed to largely settle at the bottom of the settler, by which an electrolyte is produced that is leaner in anode slimes as compared to the first electrolyte stream leaving the electrolytic cell.

In an embodiment of the present invention, the second stream of electrolyte is combined with the first and/or with the third stream of electrolyte into a combined stream of electrolyte containing anode slimes. This brings the advantage that these streams may be processed together, which simplifies the downstream operation.

In an embodiment of the present invention, the process comprises the recycle to the electrolytic cell of electrolyte that has been removed from the cell. This recycle brings significant advantages. The recycle of electrolyte brings the advantage that process chemicals in the electrolyte, such as sulphuric acid, are reused. A further advantage is that compounds that remain soluble in the electrolyte but tend to build up during electrorefining operation, are able to concentrate up to higher concentrations, which makes the downstream recovery of these compounds more effective.

In an embodiment of the present invention, the process comprises the removal of an electrolyte bleed stream from the electrolyte recycle. Such a bleed stream brings the advantage that its removal rate is able to control the concentration of compounds in the electrolyte that tend to build up in the electrolyte and remain in solution. One such compound is nickel sulphate, for which the solubility limit is significant.

In an embodiment of the present invention, the bleed stream is subject to at least one electrowinning step. The applicants have found that it is advantageous to recover particular metals from this bleed stream. The bleed stream contains significant levels of copper, and a major portion thereof may readily be selectively recovered by copper electrowinning. The bleed stream may also contain significant levels of nickel. Also these may selectively be recovered by nickel electrowinning, a process that is similar but somewhat different from copper electrowinning, and which operates better once the copper content of the electrolyte has been reduced to a level that is at most 20 grams/litre, preferably at most 15 grams/litre, more preferably at most 10 grams/litre, even more preferably at most 5 grams/litre, yet more preferably at most 1 grams per litre, preferably at most 750 milligrams/litre, more preferably at most 500 milligrams/litre, even more preferably at most 250 milligrams/litre, preferably at most 100 milligrams/litre, more preferably at most 50 milligrams/litre, even more preferably at most 10 milligrams/litre.

In an embodiment of the present invention, most of the metals are removed from the bleed stream, thereby forming a "black acid" stream, i.e. a concentrated acid stream. This black acid stream is typically and advantageously more concentrated in acid than the electrolyte. The applicants prefer to remove the metals, in particular the nickel, by evaporation of water from the bleed stream, preferably after reducing the copper content as described above. By this evaporation, nickel sulphate concentrates up to above its solubility limit, and crystallizes. The nickel sulphate crystals may then be recovered by sedimentation, filtration, centrifuging, or combinations thereof.

In an embodiment of the present invention, the black acid stream is recycled to the electrolytic cell, preferably the black acid stream being recycled after extra copper cations having been added to the black acid. This brings the advantage that most of the acid in the bleed stream may be reused, and less acid make-up is required in order to maintain the acid concentration in the electrolyte at the desired level. The applicants have further found that the black acid, because of its high acid concentration, particularly when higher than this of the electrolyte in the cell, is highly suitable for dissolving copper into, as discussed further down in this document. Together with contributing in the maintenance of the acid concentration in the electrolyte, the black acid recycle including extra copper cations contributes in maintaining the copper cation concentration in the electrolyte at the desired operating concentration.

In an embodiment of the present invention, anode slimes are separated from at least one of the first, the second and/or the third electrolyte streams, preferably from the combined stream of electrolyte containing anode slimes, preferably upstream of the removal of an electrolyte bleed stream from the electrolyte recycle, preferably the anode slimes being removed as a solid, more preferably using a filter press or a tube press. This brings the advantage of controlling the anode slimes concentration in the electrolytic cell. The applicants prefer to make this separation of anode slimes from the electrolyte as clean as possible, in order to reduce into the anode slimes by-product the presence of copper and/or nickel, at least the copper and/or nickel that are present as dissolved in the electrolyte.

In an embodiment of the present invention wherein the anode slimes are removed as a solid and wherein the anode slimes solid is water washed before recovery of the anode slime by-product from the overall process, the wash water being recycled to the electrorefining process. This same wash water may further be used, subsequent to the described washing step, and/or may have been used, prior to the described washing step, for other useful functions such as washing the spent anodes and/or cathodes after these have been removed from the electrolytic cell, and/or for dissolving ingredients that need to be added to the electrolytic cycle, such as additives or extra copper cations, before being recycled to the electrorefining process.

The washing of the anode slimes solids brings the advantage that a lesser amount of the soluble metals, in particular copper and/or nickel, are leaving the process with the anode slimes by-product in which they do not bring much value but usually represent a burden. By recycling this used wash water, more of these soluble metals may be kept in the process, and may then more conveniently be removed as part of the bleed stream, from which they are more readily recovered.

In an embodiment of the present invention wherein the anode slimes solid is water washed, the water wash of the anode slimes is operated at a temperature of at least 40°C, preferably at least 50°C, more preferably at least 60°C, even more preferably at least 65°C, and at most 90°C, preferably at most 85°C, more preferably at most 80°C, even more preferably at most 75°C. The applicants have found that a higher temperature of the water wash helps in washing the sulphate salts out of the anode slimes solid, in particular the copper sulphate and/or nickel sulphate. Because the used wash water is returned into the electrolyte cycle, it is advantageous to have this wash water having a temperature that is close to the desired electrolyte temperature, because it reduces any heating and/or cooling duty to assure a proper heat household in the electrolyte cycle. The applicants have also found that compliance with the upper temperature limit as specified reduces the risk for damage to the equipment construction material. The filter plates of the filter or filter press used to retain the anode slimes during the water wash may e.g. be made from polypropylene, and the applicants have found that this material is less subject to wear and tear at a temperature in compliance with the upper limit as specified.

In an embodiment of the process according to the present invention, the anode slimes that have been recovered, preferably after water washing, are treated with sufficient base, preferably NaOH, to convert most of the metal sulphates into a soluble sulphate salt, such as Na₂SO₄, and insoluble metal hydroxides. In this way the sulphur content of the anode slimes may be reduced, which makes them more acceptable for the downstream recovery of the metals, a.o. because it is more concentrated in the metals. Metal recovery processes are typically better equipped to handle metal oxides and/or hydroxides. Often other types of feedstocks are preferably roasted to obtain the oxides before the metals may be recovered.

The hydroxides are preferably heated to form oxides, and in a pyrometallurgical process step performed in a furnace, using a reducing agent such as iron, a multi-metal solder may be recovered from the anode slimes, and an iron oxide containing slag as by-product. In order to extract more Sn from the slag into the metal phase, and to improve the physical phase separation between the solder phase and the slag phase, extra lead may be added, preferably until the tin/lead weight ratio in the metal phase is close to 1/3.

In an embodiment of the present invention, extra copper cations are introduced into the electrolyte in the cell. The applicants have found that several contaminant metals in the anode consume electrical current when they go into solution into the electrolyte, over and above the current consumed by the anode copper going into solution. At the cathode this extra current causes more copper to deposit than there was copper dissolved at the anode. There is thus more copper depositing on the cathode than there is copper coming into solution at the anode. This imbalance represents a net consumer of copper from the electrolyte. In order to compensate for this net consumption, extra copper cations are added into the electrolyte in the electrolytic cell. The applicants have found that the copper imbalance becomes more important as the level of impurities in the anode increases. While conventional electrorefining operations, which start from anodes comprising 98-99%wt of copper, usually operate without addition of extra copper cations to the electrolyte, the applicants have found that this addition is highly beneficial in the process according to the present invention, in which the anodes comprise less copper and more other metals. The applicants have found that the addition allows the process to operate over a long period of time, with intensive electrolyte recycle, and with a high concentration of copper cations in the electrolyte, which is particularly beneficial at the cathode where the high concentration contributes to a high process productivity at a reduced power consumption and a better cathode quality. Indeed, the applicants have found that adding extra copper cations to the electrolyte helps to maintain the concentration of copper cations within the desired levels, which is important to maintain over the long term the production of high quality copper cathodes without causing or introducing extra operating problems. The applicants have found that this concern is of a higher importance with anode compositions that contain a higher level of impurities. The applicants have also found that this feature allows to avoid the need for stopping the operation because of depletion of the copper concentration in the electrolyte below the minimum desired level, such as in several of the processes disclosed in the art.

In an embodiment of the present invention wherein extra copper cations are added into the electrolyte, the extra copper cations are introduced into the electrolyte feed to the cell, preferably into the electrolyte that is recycled to the electrolytic cell. The applicants have found that this is a highly convenient method for controlling the copper concentration in the electrolyte at the desired level.

In an embodiment of the present invention wherein extra copper cations are added into the electrolyte, a liquid stream comprising at least part of the recycled electrolyte, and/or a stream which is even more concentrated in acid, such as at least a part of the recycled black acid, or at least a part of the bleed stream post copper removal by electrowinning, if present, or at least part of the acid make-up to the process, is contacted with a copper containing solid for dissolving more copper into the liquid stream, preferably in a leaching vessel, before the liquid stream with the extra copper cations is transferred to the electrolytic cell. The applicants find these streams highly suitable for dissolving copper from a copper containing solid and hence to pick up extra copper cations that are useful in controlling the copper concentration in the electrolyte in the electrolytic cell. The applicants prefer to use a stream which is available and which is more concentrated in acid than the electrolyte. Streams that qualify are e.g. the black acid recycle because that stream is more acidic and therefore more readily dissolves copper from a solid source. The volumes of this black acid recycle are however relatively small relative to the electrolyte inventory of the process, and may also be available only intermittently. The process usually also needs a make-up of acid, e.g. for compensating for the loss of acid in the formation of nickel sulphate and/or lead sulphate. Such acid make-up stream may also be a highly concentrated acid stream, such as at least 50%wt sulphuric acid, possibly even 96%wt sulphuric acid, which is in that case also capable of more readily dissolving copper from a solid source, as compared with the electrolyte which is recycling to the cell. The make-up volumes are also relatively small, and may not be added continuously. The applicants therefore prefer to use an acid stream that is more concentrated than the electrolyte recycling to the cell, such as the black acid recycle stream and/or the sulphuric acid make-up stream when these are available, but else they prefer to use the electrolyte recycle stream for picking up an amount of extra copper cations on its way to the cell.

In an embodiment of the present invention, the copper containing solid is in the form of granules, preferably the granules being hollow and open, optionally the granules having been produced in a pyrometallurgical process step upstream of the process. The applicants have found that the copper containing solid is preferably in a finely divided form, as compared to large blocks, because the finely divided form offers more contact surface to the extracting liquid for the same amount of solid. The applicants have found that granules are easier to handle than powder. Granules may readily be stacked in a leaching vessel, and can be retained in the vessel by a simple strainer provided on the liquid outlet nozzle. Preferably the granules are hollow, offering more contact surface for the same weight of solid material. The applicants have found that it is highly convenient that the granules of copper containing material are produced in a pyrometallurgical process step which his located upstream of the process according to the present invention. Most conveniently, this upstream process step is part of the process producing the copper intermediate product used for casting the anodes that are used in the electrolytic step of the process according to the present invention. The material of the granules may be identical to the material used for the anodes, or may have a different quality. Preferably the granules are of a higher purity copper material than the anodes.

The applicants prefer to produce high surface small copper granules by splashing liquid molten copper onto a refractory brick above the level of a large tank containing a cold liquid such as water. The liquid molten copper stream is broken up on the refractory brick and spreads into the cold liquid. This brings the advantage of local high steam generation, similar to explosion, and does form high surface small copper granules or "shots" that are highly suitable for dissolving into an acid liquid.

The applicants prefer to provide at least one leaching vessel or tower for the addition of extra copper cations into the process. Such a vessel may be a vertical cylindrical vessel. The vessel may be open to the atmosphere on top, such that the copper containing solids may readily be introduced into the vessel. The solids may be forming a bed on a support in the bottom of the vessel, above the inlet for the liquid feed. The liquid inlet is conveniently provided below the bed support. The liquid flows upwards through the bed of solids and leaves the vessel via an overflow duct. The vessel is preferably designed such that the liquid upward velocity is low, and the specific gravity of the copper containing solids is sufficient to avoid solids being entrained from the leaching vessel with the liquid outlet. Preferably the copper containing solids are of high purity, such as blister copper, of at least 98%wt Cu. As the copper dissolves, the height of the bed reduces and the inventory of copper solids may be replenished via the open top of the vessel.

In an embodiment of the present invention, oxygen containing gas is added to the step of contacting the liquid stream with the copper containing solid. The applicants have found that the copper from the granules more readily comes into solution in the acidic leaching liquid under an oxidising atmosphere. Preferably the applicants inject air or enriched air, even more preferably commercially obtainable oxygen gas, into the bottom section of the leaching vessel, preferably below the bed support upon which the solids are retained. The applicants have found that the presence of oxygen in the leaching step strongly facilitates the pick-up of copper cations by the leaching liquid.

In an embodiment of the present invention, extra sulphuric acid is introduced into the process, preferably into the recycled electrolyte, if present, preferably together with or upstream of the introduction of the extra copper cations, if present. This feature provides a sulphuric acid make-up stream, useful for controlling the sulphuric acid content of the electrolyte, which otherwise would risk to become depleted because of the consumption of sulphate anion in lead and/or nickel sulphate. As discussed above, the applicants prefer to use a concentrated sulphuric acid source for this make-up, such as 96%wt sulphuric acid, and prefer to introduce this make-up acid where it comes into contact with the copper containing solids for picking up extra copper cations. High concentration acid make-up brings the advantage that it represents little risk for the introduction into the process of elements that are undesired. A further advantage is that it takes much less volume and handling hassle as compared to a less concentrated stream, and that also the copper more readily dissolves in it.

In an embodiment of the present invention, the gas that is introduced into the cell is air. The applicants prefer to use air for bubbling through the electrolytic cell, rather than its possible alternatives nitrogen, carbon dioxide, or even sulphur dioxide (SO₂) as proposed in US 1,260,830 and by E.N. Petkova in "Mechanisms of floating slime formation and its removal with the help of sulphur dioxide during the electrorefining of anode copper", Hydrometallurgy, Vol. 46, Issue 3, October 1997, pp 277-286. The applicants prefer air because of its convenience and the improved safety and industrial hygiene aspects. The use of nitrogen and/or carbon dioxide would bring the risk that personnel might inadvertently become exposed to clouds of an atmosphere that is oxygen deficient. Sulphur dioxide brings the extra features that it is a toxic gas having a pungent, irritating smell, and hence requires even more stringent safety and industrial hygiene measures. Air brings the additional advantage that it is an oxidising agent, which is highly convenient because it is able to oxidise As³⁺ to As⁵⁺ and/or Sb³⁺ to Sb⁵⁺, whereby these metals are able to form compounds, usually salts, such as arsenates, or oxides, that more readily sink to the bottom of the cells and/or the settlers and collect in the anode slimes layer. These phenomena are described in more detail by C.A.Moller et al in "Effect of As, Sb, Bi and Oxygen in Copper Anodes During Electrorefining", Proceedings of Copper 2010, pp. 1495-1510. Air is to the applicants a much more convenient oxidising agent than sulphur dioxide, for the reasons explained above.

In an embodiment of the present invention, the gas introduced into the cell is at a temperature in the range of the electrolyte temperature +/-30 degrees Celsius. This reduces any temperature effects that the gas introduction may bring locally in the cell. Preferably the gas temperature differs at most 25 degrees Celsius from the temperature of the electrolyte in the cell, more preferably at most 20 degrees Celsius, even more preferably at most 15 degrees Celsius. Local drops in temperature are undesired because that may cause some salts to be crystallising out locally, such as around the holes in the gas distributor, and which could impair the gas flow through those holes. A local increase of temperature is also undesired because it may cause a more rapid degradation of some of the process additives. The applicant prefer to introduce the gas into the cell at a temperature of about 45°C. The applicants prefer to maintain the electrolyte in the cell at a temperature in the range of 65-70°C, preferably about 68°C.

In an embodiment of the present invention, the gas introduced into the cell is at least saturated in water at the temperature of introduction of the gas. This reduces the risk for crystallisation in and around the opening through which the gas enters the electrolyte.

In an embodiment of the present invention, water is injected, preferably as an aerosol, into the gas before it is introduced into the cell. The applicants prefer to inject water that is low in sodium content, preferably below the detection limit, preferably the injection water being obtained by reverse osmosis. The applicants have found that this feature reduces the formation of salts on the injection points of the gas into the electrolyte, and also on any microporous polymer sleeve that may be provided around the gas diffuser tubes.

In an embodiment of the present invention, the gas bubbles passing through the electrolyte have an average diameter in the range of 1 to 3 mm. The applicants have found that gas bubbles of at most 3 mm diameter are more effective in removing depleted electrolyte adjacent to the surfaces of the cathodes in order to permit fresh electrolyte to come into contact with the cathodes. The small bubbles also tend to minimise the production of acid mist above the electrolysis cell. Smaller bubbles are also preferred because they introduce a regime in the cell that becomes similar to a so-called "Dissolved Air Flotation" (DAF) regime, such that small particles of anode slimes are readily brought up to the surface of the liquid column and readily leave the cell via the overflow. The size of the gas bubbles may e.g. be determined as explained by Reza Al Shakarji et al, in "The sizing of oxygen bubbles in copper electrowinning", Hydrometallurgy, 109 (2011), pp. 168-174.

In an embodiment of the present invention, the gas is introduced into the cell through a gas diffuser provided below the electrodes but above the space which is provided in the cell bottom for collecting the anode slimes layer, preferably the gas diffuser comprising selectively perforated diffuser pipes connected to the gas supply pipe. The location of the gas diffuser divides the vertical height of the electrolyte volume into two parts, the upper part through which gas bubbles rise which bring more turbulence, and the lower part without gas bubbles which is more stagnant, in particular if also the electrolyte feed is provided at about the height of the gas diffuser. The extra turbulence in the upper part brings the advantages discussed above in high detail. The lower fluid movement in the lower part facilitate the settling of anode slimes particles on the bottom of the cell. The applicants prefer to use a diffuse as described in WO 2005/019502 A1, using a plurality of hoses made from and/or including microporous material which permits, in use, the sparging gas to pass through this microporous material so as to form a multiplicity of fine bubbles in the electrolyte in the cell.

The applicants have found that the diffuser preferably provides a uniformly distributed presence of gas bubbles throughout the upper part of the electrolyte volume. Non-uniformity in the gas bubble presence may cause differences in hydrostatic pressure on an electrode, which brings the risk that the electrode may become tilted sideways and cause contact, and hence an electrical short-circuit, with an adjacent counter-electrode.

The applicants prefer to provide a gradient in the density of gas introduction, with less gas being introduced closer to the cell wall having the overflow and more gas closer to the opposite cell wall. This brings the advantage that the gas gradient creates an extra driving force for liquid flow in the direction of the overflow.

In an embodiment of the present invention, the gas is introduced into the cell using a pressure, in the supply line at the height of the liquid level in the cell, in the range of at least 0.5 bar gauge (barg), preferably at least 0.6 barg, more preferably at least 0.7 barg. This overpressure is necessary to overcome the hydrostatic pressure at the point of introduction of the gas into the cell, preferably below the electrodes. The applicants prefer to provide a higher overpressure than only the hydrostatic pressure, in order to enhance the sparging of the gas into the liquid and the formation of smaller bubbles. The pressure at the indicated point in the supply line is preferably at most 3.5 barg, preferably at most 3.0 barg, more preferably at most 2.5 barg, even more preferably at most 2.0 barg, preferably at most 1,75 barg, more preferably at most 1.50 barg, even more preferably at most 1.25 barg. Compliance with this upper limit reduces the risk for blowing out electrolyte from the cell, as well as the formation of nickel aerosols. Blown-out electrolyte may cause equipment damage, and the formation of nickel aerosols generates an industrial hygiene concern.

Primarily for the reasons of industrial hygiene, the applicants prefer to provide a cap above the cell equipped with an exhaust suction and a drop catcher to avoid acid droplets, possibly containing metal particles, from entering the working place.

In an embodiment of the present invention, the electrolyte in the cell is maintained at a temperature in the range of 20°C to 75°C. Preferably the electrolyte temperature in the cell is at least 25°C, more preferably at least 30°C, even more preferably at least 35°C, preferably at least 40°C, more preferably at least 45°C, even more preferably at least 50°C, preferably at least 55°C, more preferably at least 60°C, even more preferably at least 65°C, preferably above 65°C. At higher temperatures, the copper diffusion rate is improved, and this is particularly beneficial for the diffusion of the copper cations through the stagnant or laminar flowing films that are typically present on the surfaces of anode and/or cathode. Higher temperatures also increase the solubility of sulphates in the electrolyte, and hence reduce the risk for crystallisation, especially at sensitive locations. The applicants prefer to maintain the electrolyte at a temperature below 75°C, preferably at most 72°C, more preferably at most 70°C. This brings the advantage that the additives which are temperature sensitive, such as gelatine and/or many flocculants, are more stable and less subject to degradation. A lower temperature also reduces the risk that the cathode would pre-strip, i.e. that the deposited copper layer would release from the stainless steel blank while the cathode is still in the electrolytic cell. A lower temperature also reduces the energy needed for maintaining the temperature of the electrolyte, which is usually above ambient and hence requires heat input.

In an embodiment of the present invention, the anode composition and/or the molten liquid metal composition according to the present invention comprises at least 0.25%wt of nickel, preferably at least 0.50%wt, more preferably at least 0.75%wt, even more preferably at least 1.00%wt, preferably at least 1.25%wt, more preferably at least 1.50%wt, even more preferably at least 2.00%wt, preferably at least 2.10%wt, more preferably at least 2.25%wt, even more preferably at least 2.50%wt, preferably at least 2.75%wt, more preferably at least 3.00%wt of nickel. A higher nickel level in the anode allows the upstream process to accept more feedstocks that contain significant amounts of nickel. Such feedstocks are difficult to handle for most electrorefining operations, and are therefore more readily available at economically more favourable conditions. Optionally the anode composition comprises at most 10.0%wt of nickel, preferably at most 9.0%wt, more preferably at most 8.0%wt, even more preferably at most 7.00%wt, preferably at most 6.00%wt, more preferably at most 5.50%wt, preferably at most 5.00%wt, more preferably at most 4.50%wt, preferably at most 4.00%wt, more preferably at most 3.50%wt of nickel. At lower levels of nickel in the anode composition, the bleed stream may be kept smaller, which simplifies its further processing and the associated operating costs. Lower levels of nickel also reduce the need for adding extra copper cations into the electrolyte. Less nickel also reduces the anode passivation, which allows the measures taken to cope with anode passivation to be operated at a lower severity and/or intensity. Less nickel also reduces the industrial hygiene concerns associated with nickel aerosols.

In an embodiment of the present invention, the anode composition and/or the molten liquid metal composition according to the present invention comprises at least 0.25%wt of lead, preferably at least 0.50%wt, more preferably at least 0.75%wt, even more preferably at least 1.00%wt, preferably at least 1.25%wt, more preferably at least 1.50%wt of lead. Allowing a higher lead level in the anode allows the upstream process to operate at a lower severity with respect to the separation between lead and copper, and also to accept more feedstocks that contain significant amounts of lead. Such feedstocks are difficult to handle for many copper production operations, and are therefore more readily available at economically more favourable conditions. Optionally the anode composition comprises at most 6.00%wt of lead, preferably at most 5.00%wt, more preferably at most 4.00%wt, even more preferably at most 3.00%wt, yet more preferably at most 2.50%wt, preferably at most 2.00%wt, more preferably at most 1.80%wt, even more preferably at most 1.60%wt, yet more preferably at most 1.50%wt of lead. At lower levels of lead in the anode composition, there is less lead sulphate forming in the cell. The consumption of acid towards lead sulphate is therefore reduced. Lead sulphate has a very low solubility in the electrolyte and therefore readily crystallizes out in the cell. The crystals represent a risk for being included into the cathode. A lower lead level in the anode therefore reduces the risk for lead being retrieved as an impurity in the cathode. The lead precipitates are preferably removed from the cell as part of the anode slimes in the first stream of electrolyte and/or in the second stream of electrolyte. Because the presence of lead does not contribute significantly to the value of the anode slimes produced by the process, but does contribute to the operating burden for processing the anode slimes, a lower lead presence in the anode is beneficial because it reduces the anode slimes volume and hence its operating burden, without reducing the value of the anode slimes by-product from the process. A lower level of lead in the anode composition also reduces the concern of lead releasing into the workplace during human intervention, e.g. when the anode slimes are released from the filter press, with which is associated a concern of industrial hygiene.

In an embodiment of the present invention, the anode composition and/or the molten liquid metal composition according to the present invention comprises at least 0.25%wt of tin, preferably at least 0.50%wt, more preferably at least 0.75%wt, even more preferably at least 1.00%wt, preferably at least 1.25% wt, more preferably at least 1.50%wt of tin. Allowing a higher tin level in the anode allows the upstream process to operate at a lower severity with respect to the separation between tin and copper, and also to accept more feedstocks that contain significant amounts of tin. Such feedstocks are difficult to handle for many copper production operations, and are therefore more readily available at economically more favourable conditions. In addition, the tin in the anode slimes is quite readily recoverable therefrom, and represents a significant part of the commercial value obtainable from the anode slimes by-product from the process according to the present invention. Optionally the anode composition comprises at most 6.00%wt of tin, preferably at most 5.00% wt, more preferably at most 4.00%wt, even more preferably at most 3.00%wt, yet more preferably at most 2.50%wt, preferably at most 2.00% wt, more preferably at most 1.80%wt, even more preferably at most 1.60%wt of tin. At lower levels of tin in the anode composition, the volume of anode slimes is reduced, because tin primarily leaves the process as an oxide of tin or tin plus antimony, both expected to end up in the anode slimes. Less tin in the anode therefore reduces the burden of processing the anode slimes. A lower tin level in the anode reduces the risk for tin being retrieved as an impurity in the cathode. Less tin also reduces the risk for growth of solid SnSb compounds on the wetted surfaces of the electrolytic cycle, in particular in and around the electrolytic cells.

In an embodiment of the present invention, the anode composition and/or the molten liquid metal composition according to the present invention comprises at least 0.10%wt of antimony, preferably at least 0.15%wt, more preferably at least 0.20%wt, even more preferably at least 0.25%wt, preferably at least 0.30%wt, more preferably at least 0.35%wt, preferably at least 0.40%wt, more preferably at least 0.50%wt of antimony. Allowing a higher antimony level in the anode allows the upstream process to operate at a lower severity with respect to the separation between antimony and copper, and also to accept more feedstocks that contain significant amounts of antimony. Such feedstocks are difficult to handle for many copper production operations, and are therefore more readily available at economically more favourable conditions. Optionally the anode composition comprises at most 3.00%wt of antimony, preferably at most 2.50%wt, more preferably at most 2.00%wt, even more preferably at most 1.50%wt, yet more preferably at most 1.25%wt, preferably at most 1.00%wt, more preferably at most 0.90%wt, even more preferably at most 0.80%wt of antimony. At lower levels of antimony in the anode composition, there is less risk for the formation of SnSb oxide compounds which may come out of solution and form solid deposits and grow on the wetted surfaces of the electrolytic cycle, in particular in and around the electrolytic cells. A lower antimony level in the anode reduces the risk for antimony being retrieved as an impurity in the cathode. The antimony is preferably removed from the cell as part of the anode slimes in the first stream of electrolyte and/or in the second stream of electrolyte, usually in the form of an intermetallic oxide, e.g. of tin with antimony. Because the presence of antimony brings hardly any contribution to the value of the anode slimes produced by the process, but does contribute to the operating burden for processing the anode slimes, a lower antimony presence in the anode is beneficial because it reduces the anode slimes volume and hence its operating burden, without reducing the value of the anode slimes by-product obtained from the process.

In an embodiment of the present invention, the anode composition and/or the molten liquid metal composition according to the present invention comprises at least 0.010%wt of bismuth, preferably at least 0.015%wt, more preferably at least 0.020%wt, even more preferably at least 0.025%wt, preferably at least 0.030%wt, more preferably at least 0.035%wt of bismuth. Allowing a higher bismuth level in the anode allows the upstream process to operate at a lower severity with respect to the separation between bismuth and copper, and also to accept more feedstocks that contain significant amounts of bismuth. Such feedstocks are difficult to handle for many copper production operations, and are therefore more readily available at economically more favourable conditions. Optionally the anode composition comprises at most 0.50%wt of bismuth, preferably at most 0.25%wt, more preferably at most 0.200%wt, even more preferably at most 0.150%wt, yet more preferably at most 0.100%wt, preferably at most 0.090%wt, more preferably at most 0.080%wt, even more preferably at most 0.070%wt of bismuth. A lower bismuth level in the anode reduces the risk for bismuth being retrieved as an impurity in the cathode. The bismuth is preferably removed from the cell as part of the anode slimes in the first stream of electrolyte and/or in the second stream of electrolyte, presumably as metallic bismuth and/or as an arsenate, such as BiAsO₄, if sufficient arsenic is present. Because the presence of bismuth brings hardly any contribution to the value of the anode slimes produced by the process, but does contribute to the operating burden for processing the anode slimes, a lower bismuth presence in the anode is beneficial because it reduces the anode slimes volume and hence its operating burden, without reducing the value of the anode slimes by-product obtained from the process.

In an embodiment of the present invention, the anode composition and/or the molten liquid metal composition according to the present invention comprises at least 0.0010%wt of zinc, preferably at least 0.0050%wt, more preferably at least 0.0075%wt, even more preferably at least 0.010%wt, preferably at least 0.015%wt, more preferably at least 0.020%wt of zinc. Allowing a higher zinc level allows the upstream process to operate at a lower severity with respect to the removal of zinc of the copper containing streams leading to the anode composition, and also to accept more feedstocks that contain significant amounts of zinc. Such feedstocks are difficult to handle for many copper production operations, and are therefore more readily available at economically more favourable conditions. Optionally the anode composition comprises at most 0.50%wt of zinc, preferably at most 0.25%wt, more preferably at most 0.200%wt, even more preferably at most 0.150%wt, yet more preferably at most 0.100%wt, preferably at most 0.090%wt, more preferably at most 0.080%wt, even more preferably at most 0.070%wt, preferably at most 0.050%wt, more preferably at most 0.025%wt of zinc. A lower zinc level in the anode reduces the risk for zinc being retrieved as an impurity in the cathode. The zinc is preferably removed from the process as part of the bleed from the electrolyte cycle and/or as part of the anode slimes in the first stream of electrolyte and/or in the second stream of electrolyte. Because the presence of zinc brings hardly any contribution to the value of the anode slimes and/or of the bleed stream produced by the process, but does contribute to the operating burden for processing the anode slimes and/or the bleed stream, a lower zinc presence in the anode is beneficial because it reduces the anode slimes volume and hence its operating burden, without reducing the value of the anode slimes by-product obtained from the process. The same applies to the value of the bleed stream and its processing burden.

In an embodiment of the present invention, the anode composition comprises at least 0.005%wt of arsenic, preferably at least 0.010%wt, more preferably at least 0.020%wt, even more preferably at least 0.025%wt, preferably at least 0.050%wt, more preferably at least 0.060%wt, even more preferably at least 0.070%wt, yet more preferably at least 0.075%wt of arsenic. Allowing a higher arsenic level in the anode allows the upstream process to operate at a lower severity with respect to the removal of arsenic of the copper containing streams leading to the anode composition, and also to accept more feedstocks that contain significant amounts of arsenic. Such feedstocks are difficult to handle for many copper production operations, and are therefore more readily available at economically more favourable conditions. Arsenic is also claimed to reduce anode passivation, and is able to form intermetallic compounds such as arsenates, such as SbAsO₄ and BiAsO₄, which readily come out of solution and bring other metal impurities into the anode slimes. A higher arsenic compound may therefore also bring the advantage of a reduced anode passivation and a more ready removal of other impurity metals by making them become part of anode slimes. Optionally the anode composition comprises at most 0.40%wt of arsenic, preferably at most 0.30%wt, more preferably at most 0.250%wt, even more preferably at most 0.200%wt, yet more preferably at most 0.175%wt, preferably at most 0.150%wt, more preferably at most 0.125%wt, even more preferably at most 0.100%wt of arsenic. A lower arsenic level in the anode reduces the risk for arsenic being retrieved as an impurity in the cathode. The arsenic is preferably removed from the cell as part of the anode slimes in the first stream of electrolyte and/or in the second stream of electrolyte, e.g. as an arsenate of another metal impurity such as antimony or bismuth, or as a mixed oxide such as 2AS₂O₅.3Sb₂O₃, or being bound and/or caught in the oxides of tin and/or tin plus antimony. Because the presence of arsenic brings hardly any contribution to the value of the anode slimes produced by the process, but does contribute to the operating burden for processing the anode slimes, a lower arsenic presence in the anode is beneficial because it reduces the anode slimes volume and hence its operating burden, without reducing the value of the anode slimes by-product obtained from the process.

In an embodiment of the present invention, the anode composition and/or the molten liquid metal composition according to the present invention comprises at least 0.0001%wt of silver, preferably at least 0.0010%wt, more preferably at least 0.0050%wt, even more preferably at least 0.0100%wt, preferably at least 0.0150%wt, more preferably at least 0.0200%wt, even more preferably at least 0.0250%wt, preferably at least 0.0300%wt, more preferably at least 0.0350%wt, even more preferably at least 0.0400%wt of silver. Silver readily leaves the process of the present invention most typically as part of the anode slimes, and silver is a strong contributor to the value of the anode slimes by-product of the process according to the present invention. A higher silver content is thus favoured because it makes the processing of the anode slimes, and the recovery of the metals contained therein, economically more rewarding. Optionally the anode composition and/or the molten liquid metal composition according to the present invention comprises at most 0.50%wt of silver, preferably at most 0.25%wt, more preferably at most 0.200%wt, even more preferably at most 0.150%wt, yet more preferably at most 0.100%wt, preferably at most 0.075%wt, more preferably at most 0.060%wt, even more preferably at most 0.050%wt of silver. A high presence of silver increases the risk for silver being incorporated into the cathodes. The silver in the copper anode does not bring any extra economic value and is thus a downgrade compared to silver in the anode slimes. Silver is an unwanted contaminant in cathode copper, because it brings technical problems in the main end-use of copper, i.e. the pulling of copper wire.

In an embodiment of the present invention, the anode composition comprises at most 0.0500%wt or 500 ppm wt of oxygen, preferably at most 0.0400%wt, more preferably at most 0.0300%wt, even more preferably at most 0.0200%wt, yet more preferably at most 0.0180%wt, preferably at most 0.0150%wt, more preferably at most 0.0125%wt, even more preferably at most 0.0100%wt or 100 ppm wt of oxygen. The applicants prefer the oxygen content to be below the specified limit because excessive oxygen presence increases the risk for anode malformation during casting and cooling, as explained elsewhere in this document. For that reason the applicants prefer that the anode composition contains oxygen below the upper limit as specified.

Optionally the anode composition comprises at least 0.0005%wt or 5 ppm wt of oxygen, preferably at least 0.0010%wt, more preferably at least 0.0015%wt, even more preferably at least 0.0020%wt, preferably at least 0.0025%wt, more preferably at least 0.0030%wt, even more preferably at least 0.0040%wt, preferably at least 0.0050%wt, more preferably at least 0.0075%wt, even more preferably at least 0.0100%wt or 100 ppm wt of oxygen. The applicants have found that it is preferable to not reduce the oxygen content in the anode composition to very low levels. The burden and effort of achieving very low levels of oxygen in the anode composition is not compensated by an equivalent economic benefit. On the contrary, the extra efforts typically performed for further reducing the oxygen content down to below the lower limit as specified are usually tedious, complex, and tend to also remove some valuable metals from the anode composition, hence reduce its volume and create lower value side streams. For that reason, the applicants prefer to have a level of oxygen in the anode composition in compliance with the lower limit as specified.

In an embodiment of the present invention, the anode composition is the molten liquid metal composition according to the present invention from which the oxygen content has been brought further down, preferably to have it arrive within the concentration range that is specified for the anode composition of the process according to the present invention, for instance of from 5 ppm wt to 500 ppm wt.

In an embodiment of the present invention, the electrolyte composition complies with at least one and preferably all of the following conditions:
- copper in the range of 20 to 55 grams/litre,
- nickel in the range of 25 to 90 grams/litre,
- sulphuric acid in the range of 130 to 200 grams/litre, preferably at most 190 grams/litre, more preferably at most 180 grams/litre, even more preferably at most 170 grams/litre, yet more preferably at most 160 grams/litre, and optionally at least 140 grams/litre,
- tin in the range of 0.4 to 1.4 grams/litre, preferably at most 1.2 grams/litre, more preferably at most 1.0 grams/litre, even more preferably at most 0.90 grams/litre, yet more preferably at most 0.80 grams/litre, and
- arsenic in the range of 10 to 200 milligrams/litre, preferably at least 15 milligrams/litre, more preferably at least 20 milligrams/litre and optionally at most 175 milligrams/litre, preferably at most 150 milligrams/litre, more preferably at most 100 milligrams/litre, even more preferably at most 75 milligrams/litre, and yet more preferably at most 50 milligrams/litre.

The applicants have found that it is advantageous to maintain the dissolved copper content of the electrolyte within the prescribed limits, because that range provides an excellent balance between its positive function at the cathode, where a high concentration helps the diffusion through the stagnant film on the cathode surface, and its possible negative functionality at the anode where a high concentration reduces the driving force for the diffusion through the stagnant film on the anode surface.

The applicants prefer to maintain the nickel content in the electrolyte within the prescribed limits, preferably at least 30 grams/litre, more preferably at least 35 grams/litre, even more preferably at least 40 grams/litre, preferably at least 45 grams/litre, more preferably at least 50 grams/litre, even more preferably at least 55 grams/litre, preferably at least 60 grams/litre, more preferably at least 65 grams/litre. A higher nickel content increases the value of the bleed stream from which the nickel may be recovered by its further processing, because of the higher amount of nickel present, but also because its recovery becomes more efficient. On the other hand a higher nickel content in the electrolyte also increases the risk that locally, e.g. in cold spots or in drops of electrolyte that have splashed onto equipment parts that are not submerged into the electrolyte but may be hot, nickel sulphate comes out of solution and forms a solid which may impair or even hinder a proper equipment operation. For those reasons, the applicants prefer to maintain the nickel content in the electrolyte at a level of at most 85 grams/litre, preferably at most 80 grams/litre, more preferably at most 75 grams/litre, even more preferably at most 70 grams/litre.

The applicants have found that it is advantageous to maintain the sulphuric acid content of the electrolyte within the prescribed limits, because that range provides an excellent balance between on the one hand its positive functions, to dissolve metals from the anode and to bring electrical conductivity to the electrolyte, and on the other hand its possible negative functionality by increasing the density and the viscosity of the electrolyte, which impairs mass and heat transfer and anode slimes settling rates, and the risk for damaging the operating equipment that may come into contact with the electrolyte. Higher sulphuric acid concentrations may impose the selection of more exotic and hence expensive construction materials, i.e. extra investment costs that may be avoided by complying with the upper limit as specified.

The applicants have found that tin dissolved in the electrolyte has a tendency to form so-called "floating slimes", anode slime particles that do not sink to the bottom in the electrolytic cell, nor sink to the bottom in a settler where the residence time may be significantly higher and the liquid velocities may be significantly lower than in the cell. Such floating slimes are thus not removed from the electrolyte by the various provisions of the process as described for anode slimes removal.

The applicants desire to have the level of arsenic in the electrolyte to stay below the upper limit as specified. The presence of arsenic above the specified lower limit may be beneficial because it reduces the anode passivation mechanism, and is able to bring more other metal contaminants into intermetallic compounds that are solid and become part of the anode slimes. More arsenic than the specified upper limit in the electrolyte may however be disadvantageous because it leads to more arsenic in the bleed stream that needs further processing for recovery of most of its metal content, and also brings more arsenic in the anode slimes by-product. More arsenic may bring extra burdens for the further processing of the anode slimes and/or of the bleed stream removed from the electrolytic cycle, to the point that it even may necessitate an extra step in their respective further processing. More arsenic brings no extra value to the by-product streams, and is therefore preferably kept below the upper limit as specified. On the other hand, the applicants have found that low levels of arsenic, in compliance with the lower limit as specified, are acceptable because the extra burden or restrictions imposed by a requirement for an even lower arsenic content are not fully compensated by the extra benefits of the lower presence of arsenic.

In an embodiment of the present invention, at least one and preferably all of the following process chemicals are added into the electrolyte as prescribed:
- surface active components (e.g. gelatine) in the range of 25 to 900 grams/ton of cathode copper produced, preferably at least 50 grams/ton, more preferably at least 100 grams/ton, even more preferably at least 150 grams/ton, preferably at least 200 grams/ton, more preferably at least 250 grams/ton, preferably at least 300 grams/ton, more preferably at least 350 grams/ton, even more preferably at least 400 grams/ton, yet more preferably at least 450 grams/ton, preferably at least 500 grams/ton, more preferably at least 600 grams/ton and optionally at most 800 grams/ton, preferably at most 700 grams/ton, more preferably at most 600 grams/ton, even more preferably at most 500 grams/ton, even more preferably at most 400 grams/ton, preferably at most 350 grams/ton of cathode copper produced,
- hydrochloric acid (HCI) in the range of 25 to 250 grams of HCI per ton of cathode copper produced,
- hydrobromic acid (HBr) in the range of 25 to 400 grams of HBr per ton of cathode copper produced,
- at least one flocculant in the range of 800 to 3000 milligrams per ton of cathode copper produced, preferably at least 1000, optionally at most 2500, preferably at most 2000, more preferably at most 1500 milligrams/ton of cathode copper produced, and
- thiourea in the range of 15-150 grams per ton of cathode copper produced.

The applicants prefer to add at least one surface active component to the electrolyte. The applicants have found that the surface active components reduce/avoid the growth of dendrites on the cathodes, and hence reduce the risk for short-circuit formation. The applicants have found that gelatine is a very suitable surface active component. The applicants have found that the prescribed addition range, and typically about 650 grams gelatine per ton of cathode copper produced, is sufficiently effective without causing extra problems or unwarranted operating costs.

The applicants prefer to add hydrochloric acid (HCI) into the electrolyte. The hydrochloric acid brings the advantage that the polymerisation of any gelatine that may be added is impaired and its polymer chains are cut into smaller pieces, such that the gelatine retains its activity. Even more important is that the chlorine from the hydrochloric acid is able to bind silver (Ag) in an insoluble form (AgCI) which readily ends up as part of the anode slimes, and may conveniently be removed from the process, such that a high portion of the silver may be recovered economically. The applicants prefer to add at least 30 grams of hydrochloric acid per ton of cathode copper produced, preferably at least 50 grams, more preferably at least 75 grams, even more preferably at least 100 grams per ton of cathode copper produced, and optionally at most 225 grams, preferably at most 200 grams, more preferably at most 175 grams, preferably at most 150 grams per ton of cathode copper produced. The applicants find it most convenient to introduce the hydrochloric acid as a 30%wt solution, and prefer to add about 430 millilitre thereof per ton of cathode copper produced, but other concentrations may be used if convenient.

The applicants prefer to add also hydrobromic acid (HBr) to the electrolyte, in the dosing range as specified. The applicants prefer to add at least 30 grams of hydrobromic acid per ton of cathode copper produced, preferably at least 50 grams, more preferably at least 75 grams, even more preferably at least 100 grams per ton of cathode copper produced, and optionally at most 350 grams, preferably at most 300 grams, more preferably at most 250 grams, preferably at most 200 grams per ton of cathode copper produced. The applicants prefer to add typically about 125 grams HBr per ton of cathode copper produced. The hydrobromic acid brings the same advantages as the hydrochloric acid. Hydrobromic acid addition brings the extra benefit that its silver salt (AgBr) is even less soluble than the chloride. The hydrobromic acid thus brings the advantage that it is able to remove more silver from the electrolyte into the anode slimes. The applicants prefer to use HBr as a 48%wt solution but other concentrations may be used if convenient. The applicants prefer to use both the HCI and the HBr as specified.

The applicants prefer to add at least one flocculant to the electrolyte, preferably where the electrolyte enters the settlers, in the dosing range as specified and typically about 1035 milligrams per ton of cathode copper produced. We prefer to use a cationic polyacrylamide, based on adipic acid, which is e.g. available under the tradename ZETAG^{®}, type 7565.

The applicants prefer to also add thiourea to the electrolyte, preferably where the electrolyte enters the settlers, at a dosing rate of 15-150 grams per ton of cathode copper produced, preferably at least 18, more preferably at least 20, even more preferably at least 25, yet more preferably at least 30 and optionally at most 125 grams, preferably at most 100 grams, more preferably at most 75 grams, even more preferably at most 50 grams, yet more preferably at most 49 grams, and typically about 32 grams of thiourea per ton of cathode copper produced. The thiourea is added to influence (together with the aforementioned process chemicals) the deposit morphology (roughness and/or nodule formation), the crystal shape (round and/or sharp) and the grain type (elongated and/or field oriented), which largely results in the avoidance of nodules, porosities and dendrites in the cathode. More information about the functions of thiourea and other additives in electrorefining have been described by Baumback J, Bombach H and Stelter M, "Investigations of the Behaviour of Thiourea and alternative Additives in Copper Electrorefining", Proceedings EMC, 1 (2015), p 151-160. The applicants prefer not to exceed the upper limit as specified, in order to keep the amount of sulphur in the cathodes low.

In an embodiment of the present invention, the cathode blanks are made of stainless steel, preferably SS316L or "duplex" steel. The applicants have found that the deposited copper layer may readily be stripped from a stainless steel blank, and that the remaining blanks may readily be reused with a minimum of reprocessing for a new cathode run in the electrolytic cell.

In an embodiment of the present invention, the cathode spacing is at least 95 mm, preferably at least 100 mm, more preferably at least 105 mm, even more preferably at least 110 mm, preferably at least 115 mm, more preferably at least 120 mm. Although a smaller cathode spacing is beneficial for the electrical resistance through the cell, and hence also for the energy required by the electrorefining operation, the applicants have found that the high level of impurities in the anode composition brings extra risks for dendrite formation and growth, which are causes of short circuiting between a cathode and an adjacent anode. In order to reduce the operator intervention required in order to resolve such short circuiting, the applicants prefer to maintain the cathode distance as specified. The applicants have further found that a higher cathode distance brings the benefit of a higher cathode purity, in spite of a lower anode purity.

With cathode distance in the context of the present invention is meant the distance from the middle point of one cathode blank to the corresponding middle point of the adjacent cathode blank, and this includes the thickness of one cathode and of one anode in addition to two times the distance between a cathode surface and the surface of the adjacent anode facing the cathode surface.

In an embodiment of the present invention, the at least one cathode is renewed at a frequency that is higher than the renewal frequency of the anode. The applicants prefer to replace the cathodes in the cell by new blanks at a higher rate than replacing the spent anodes in the same cell by newly casted anodes. This brings the advantage that the cathodes are easier to strip because the layer of deposited copper is less thick. A further advantage is that the thinner copper layer on the cathode reduces the risk for damage of the blank during the stripping. Yet a further advantage is that a higher renewal frequency of the cathode reduces the risk for short circuit occurrence in the cell during the electrorefining operation. Such short circuiting causes the need for operator intervention, which is labour intensive.

The applicants have found that it is possible and advantageous to replace the cathodes partially from a particular electrolytic cell, e.g. only one third of the cathodes at one time. This brings the advantage that during the cathode replacement, the electrolytic cell may be kept in operation, and this even at its full production rate. The applicants find it advantageous to replace cathodes numbers 1, 4, 7, 10, etc... by blanks, once this is done to replace cathodes numbers 2, 5, 8, 11, etc... by blanks, and once these have been reduced replace the remaining cathode numbers 3, 6, 9, 12, etc... by blanks. The applicants have found that it is possible to keep the electrolytic cell in operation during a cathode replacement performed in this way. The applicants have found that the cell may be kept in full operation, and that the 2/3 of cathodes present in the cell are able to cope with the full current density for the short periods of time required for each time replacing 1/3 of the cathodes by new blanks.

The applicants have found that it is readily possible to reduce the oxygen content of the metal composition according to the present invention down to a level that is preferred for the anode composition as part of the process according to the present invention. The benefits of bringing the oxygen content of the metal composition in accordance of the present invention within the limits prescribed for the anode composition as part of the process according to the present invention are described elsewhere in this document.

The applicants prefer to reduce the oxygen content of the metal composition according to the present invention by means of a process step known as "poling". In a poling step, the molten liquid metal composition is contacted with a source of carbon. The carbon reacts with the oxygen in the metal composition and forms carbon oxides, CO + CO₂, gasses that escape from the molten liquid metal composition and form a reducing atmosphere above the liquid metal bath. The carbon source may be any convenient carbon containing material, such as any hydrocarbon such as natural gas or a hydrocarbon liquid, carbon black, charcoal, coal, any organic material, including wood. The applicants prefer to use natural gas because of its convenience. Thanks to the operating conditions in which the composition is molten and liquid, it is easy to create an intensive contact and the carbon in the carbon source readily reacts with the oxygen in the composition to form carbon oxides (CO or carbon dioxide) which escape as a gas from the molten liquid metal composition, leaving the metal that was bound to the oxygen in its elemental form. The poling is preferably performed at a temperature of at least 1150°C, such that the molten liquid bath becomes highly fluid, and any slag is preferably first removed from the metal liquid bath. The off-gas from the poling step is preferably submitted to an afterburning step to convert the carbon monoxide into carbon dioxide before disposal. The applicants found that it is quite convenient to correctly dose the carbon source in order to bring the oxygen content down to within the range desirable for the anode composition as part of the process according to the present invention.

The molten liquid metal composition according to the present invention preferably further comprises, as part of the impurities, at least one and more preferably all of the following elements at a level which complies with the respective limit as specified for each element:
- at least 0.10%wt and/or at most 3.00%wt of antimony,
- at least 0.010%wt and/or at most 0.5%wt of bismuth,
- at most 6.00%wt of tin,
- at most 6.00%wt of lead,
- at least 0.0001%wt and at most 0.50%wt of silver,
- at least 0.005%wt and at most 0.40%wt of arsenic,
- at least 0.001%wt and at most 0.100%wt of sulphur, and
- at most 0.50%wt of zinc.

In an embodiment, the molten liquid metal composition according to the present invention comprises sulphur within the range as specified, preferably at least 0.005%wt, more preferably at least 0.010%wt and optionally at most 0.080%wt, preferably at most 0.070%wt, more preferably at most 0.060%wt.

The applicants have found that a limited amount of sulphur may be allowed in the molten liquid metal composition, and that it brings the advantage of widening the acceptance criteria for the feedstocks of the upstream process, which therefore is allowed to accept more sulphur in its raw materials. The applicants have also found that it is advantageous to maintain the sulphur in the molten liquid metal composition in compliance with the upper limit, because more sulphur increases the risk for more sulphur ending up as a cathode impurity, and also brings more sulphur in the anode slimes. The latter may be undesired if the anode slimes are to be further processed by means of a process that includes a pyrometallurgical step, because the sulphur in the anode slimes may then cause the generation of sulphur oxide gasses (SO₂ and/or SO₃).

### EXAMPLE

The following example shows a preferred embodiment of the present invention. The example is further illustrated by the Figure, which is showing a flow diagram of the core part of an embodiment of the process according to the present invention. In this process part are recovered, starting from the anode composition 1, a cathode product 6, an anode slime product 4, a bleed-off product 5 and a spent anode product 7.

In the Figure, the numbers represent the following claim features:
1. Anodes
2. Copper shots
3. Black acid
4. Anode slimes
5. Bleed-off
6. Cathodes
7. Spent anodes

An impure molten liquid copper-based metal composition further containing nickel, tin, lead and other minor metals was prepared in accordance with the process described in our co-pending patent application PCT/EP2018/084384, filed on 11 December 2018. The composition is further detailed in Table I.

**Table I: Impure molten liquid metal composition**

| | **%wt** | |
|---|---|---|
| Cu | 92.80 | |
| Ni | 3.08 | |
| Sn | 1.39 | |
| Pb | 1.71 | |
| Sb | 0.65 | |
| Ag | 0.04 | |
| As | 0.10 | |
| Bi | 0.05 | |
| Fe | 0.02 | |
| S | 0.02 | |
| Zn | 0.03 | |
| Oxygen | 0.10 | |
| Total | 99.99 | |

The composition further contained about 5 ppm wt of gold (Au).

The impure molten liquid copper-based metal composition was introduced into a furnace, and brought at a temperature of about 1200°C by burning natural gas into the furnace. Any remaining slag floating on the molten metal was poured off. Natural gas was injected into the liquid metal, until the oxygen content of the liquid metal had been reduced down to in the range of 20-170 ppm wt.

The liquid molten metal having the reduced oxygen content was then cast in thin, flat plates constituting the anodes 1 for the subsequent electrorefining operation, and allowed to cool to ambient temperature.

A total of 52 anodes having an average weight of 444 kg and 51 stainless steel plate starter sheets (blanks) were immersed in each of 100 electrolytic cells (200) containing an acidified copper sulphate solution at 68°C which served as the electrolyte. The average electrolyte composition throughout the full electrolysis cycle is shown in Table II, in grams/litre for the major components and in ppm wt for the minor components.

**Table II: Average electrolyte composition**

| | | **grams/litre** |
|---|---|---|
| Cu | | 39.8 |
| Ni | | 67.7 |
| Sn | | 0.93 |
| | | |

| | **ppm wt** | |
|---|---|---|
| Sb | 344.7 | |
| As | 63.1 | |
| Bi | 9.0 | |
| Fe | 403.1 | |
| Al | 152.5 | |
| Cd | 29.7 | |

The sulphuric acid concentration was kept at an average concentration of 160 grams/litre by introducing concentrated sulphuric acid (96%), when and as needed, in the leaching vessel described further below. The following addition rates of process additives were maintained on average throughout the electrolysis cycle, by introducing them into the electrolyte inlet to the settlers (300):
- Gelatine at about 650 grams/ton of cathode copper produced,
- HCl in a 30%wt solution, at about 430 millilitre/ton of cathode copper produced,
- HBr in a 48%wt solution, at about 176 millilitre/ton of cathode copper produced,
- Flocculant ZETAG^{®} type 7565, a cationic polyacrylamide, at about 1035 milligrams per ton of cathode copper produced,
- Thiourea at about 32 grams per ton of cathode copper produced

The average composition of the anodes (stream 1) is shown in Table III.

**Table III: Average anode composition**

| **%wt** | **Anodes -1** | |
|---|---|---|
| Cu | 92.90 | |
| Ni | 3.08 | |
| Sn | 1.39 | |
| Pb | 1.71 | |
| Sb | 0.65 | |
| Ag | 0.04 | |
| As | 0.10 | |
| Bi | 0.05 | |
| Fe | 0.02 | |
| S | 0.02 | |
| Zn | 0.03 | |
| Oxygen | 0.02 | |
| Total | 100.01 | |

The anodes further contained about 5 ppm wt of gold (Au).

The anodes (stream 1) and stainless steel blanks were interleaved (spacing 120 mm) in an electrically parallel arrangement while the electrolytic cells themselves were connected in series. An average current density of 290 A/m² was applied causing an average electrical potential between the anodes (positive electrodes) and the cathodes (negative electrodes) of 0.46V.

The passage of the electrical current causes copper to oxidize and go into solution via the electrochemical pathway. However, some copper will also go into solution by the purely chemical pathway. All elements (metals) present in the anodes and being under the given process conditions less noble than copper will also go into solution to a certain extent at the anodes. The electrochemically and chemically dissolved metals other than copper were continuously removed by means of bleed stream 5 of electrolyte. This bleed stream was subject to a further purification step (not shown) in which the metals were selectively removed and a purified electrolyte was left over. This prevents the impurities from building up in the electrolyte during electrorefining and prevents co-deposition of the impurities on the cathodes. The purified bleed-off, also called black acid, was recycled into the electrolyte circuit as stream 3. The average bleed-off composition as well as the average black acid composition are set forth in Table IV.

**Table IV: Average bleed-off and black acid composition**

| **%wt** | **Bleed-off 5** | | **Black acid 3** | |
|---|---|---|---|---|
| Cu | | 3.32 | 0.0000 | |
| Ni | | 5.15 | 0.0930 | |
| Sn | | 0.02 | 0.0000 | |
| Pb | | 0.0013 | 0.0000 | |
| Sb | | 0.0001 | 0.0000 | |
| Ag | | 0.0001 | 0.0000 | |
| As | | 0.0014 | 0.0390 | |
| Bi | | 0.0000 | 0.0000 | |
| Au | | 0.0000 | 0.0000 | |
| Fe | | 0.03 | 0.0155 | |
| Pt | | 0.0000 | 0.0000 | |
| S | | 6.57 | 22.0501 | |
| Zn | | 0.03 | 0.0000 | |

The copper which dissolved from the anodes flowed through the electrolyte solution towards the cathodes where the copper was plated onto the stainless steel starter sheets to produce copper cathodes. The electrolyte was fed at one head end of the cell. The cell wall having the overflow was a side wall perpendicular to the orientation of the electrodes. The flow of electrolyte was kept positive throughout the electrolytic cycle. An average refresh rate of approximately 55% cell volume per hour for each cell was used in combination with heated air sparging underneath the electrodes to prevent anode passivation. The incoming air was saturated with water vapour at a temperature close to that of the electrolyte before sparging through a gas diffuser and was introduced into each cell at an average pressure of 0.75 barg. All cells were regularly inspected during electrorefining to locate short-circuited anode/cathode pairs by using a Gauss meter mounted on the overhead crane. Short-circuits were repaired by respacing the offending anodes and cathodes or by removing nodules of electrodeposited copper which may had grown between the short-circuited anode/cathode pairs. The proper control of all these parameters resulted in high quality cathodes. The average cathode composition (stream 6) is given in Table V. The cathode deposits obtained during electrorefining were brightened and smoothed by continuously adding the organic addition agents gelatine and thiourea (stream 8) to the electrolyte just upstream of the pumping system to ensure good mixing.

**Table V: Average cathode composition**

| **%wt** | **Cathodes 6** | |
|---|---|---|
| Cu | 99.9761 | |
| Ni | 0.0025 | |
| Sn | 0.0069 | |
| Pb | 0.0020 | |
| Sb | 0.0029 | |
| Ag | 0.0063 | |
| As | 0.0007 | |
| Bi | 0.0001 | |
| Au | 0.0000 | |
| Fe | 0.0002 | |
| Pt | 0.0000 | |
| S | 0.0016 | |
| Zn | 0.0001 | |
| Total | 99.9994 | |

Gold and the platinum group metals did not dissolve in the sulphate electrolyte and hence they did not enter the electrolyte or plate at the cathode as can be seen in Table II and Table V. Silver dissolved from the anodes to some extent but was made to precipitate from the electrolyte as AgCl and AgBr by adding small amounts of HCI and HBr to the electrolyte (stream 8). The appearance of silver in the cathode is believed to be primarily due to the occlusion of a small quantity of anode residues.

Lead and tin were forming compounds which are insoluble in the electrolyte and hence these metals hardly entered the electrolyte. The majority of the insoluble impurities from the anodes collected as undissolved slimes at the bottom of the electrolytic cells. These slimes were periodically removed from the cells (400) during the electrorefining operation by a suction head moving over the bottom section of the cell which was provided below the electrodes. Some insoluble impurities were lighter and were leaving the cells via the cell overflows to the settlers (300). Also these lighter slimes were periodically removed from the bottom of the settlers (400), once the slimes had sufficient time to settle down after adding flocculant to the electrolyte on its way to the settler. This way, all anode slimes were collected in a combined stream of electrolyte containing anode slimes and were further processed by a filter press (500) which separated the anode slimes (stream 4) from the clear electrolyte. Part of this clear electrolyte was recycled to the circulation tanks (100). Another part of this clear electrolyte was removed as a bleed stream (stream 5) to remove impurities such as copper and nickel by electrowinning that otherwise would build up in the electrolyte. The anode slimes were washed with heated water at 70°C to reduce the amounts of copper and nickel that were present as dissolved in the electrolyte. The washing water was recycled to the electrorefining process. The average anode slime composition (stream 4) is given in Table VI. The balance of the composition is probably oxygen and some carbon, most likely from the organic process additives.

**Table VI: Average anode slimes composition**

| **%wt** | **Anode Slimes - 4** | |
|---|---|---|
| Cu | 5.40 | |
| Ni | 1.87 | |
| Sn | 17.17 | |
| Pb | 21.21 | |
| Sb | 8.05 | |
| Ag | 0.43 | |
| As | 1.29 | |
| Bi | 0.62 | |
| Fe | 0.07 | |
| S | 6.98 | |
| Zn | 0.12 | |

The anode slimes were further found to contain about 60 ppm wt of gold and about 5 ppm wt of platinum.

To compensate for the electrochemically dissolving impurities at the anodes, which would otherwise cause a depletion of copper in the electrolyte, copper containing hollow and open nuggets (stream 2) obtained from an upstream process step were leached (600) in a leaching vessel by contacting the copper containing nuggets with the concentrated sulphuric acid used for make-up, the black acid stream returned from the bleed stream processing, as well as with a part of the electrolyte. The liquid product from the leaching vessel was recycled into the electrolyte circuit during the electrorefining process. The average composition of the nuggets used (stream 2) is set forth in Table VII. The dissolution of the copper nuggets was assisted by introducing oxygen gas at the bottom of the leaching vessel.

**Table VII: Average copper nuggets composition**

| **%wt** | **Copper nuggets 2** | |
|---|---|---|
| Cu | 95.75 | |
| Ni | 1.63 | |
| Sn | 0.98 | |
| Pb | 1.13 | |
| Sb | 0.31 | |
| Ag | 0.03 | |
| As | 0.03 | |
| Bi | 0.03 | |
| Fe | 0.01 | |
| S | 0.02 | |
| Zn | 0.09 | |

The content of gold and platinum in the copper nuggets was less than 1 ppm wt.

At the end of an anode cycle, each anode had been dissolved for about 75%. The undissolved remains of the anodes (anode scrap) were removed as spent anodes (stream 7) from the electrolytic cells and after washing, weighing and stacking they were melted and recast as fresh anodes. The average composition of the spent anodes was obviously the same as the average anode composition as shown in Table III.

The above process allowed to operate in standard electrolysis cycles of 24 days per cell, i.e. a period of 24 days of continuous operation between the introduction of a new set of anodes. The cathodes were pulled after about every 8 days, and they were replaced 1/3 at the time, while the electrolysis was continued, and at full current density. The anode slimes were removed from the bottom of the cells, at a frequency as needed that could vary from once every 3 days to once every 10 days, and this also while the electrolysis was continued at full current density.

Having now fully described this invention, it will be appreciated by those skilled in the art that the invention can be performed within a wide range of parameters within what is claimed, without departing from the scope of the invention, as defined by the claims.

## Claims

1. A process for the production of copper comprising the electrorefining of copper metal in an electrolytic cell from at least one copper anode into at least one copper cathode, using an electrolyte that is sulphuric acid based, **characterised in that**
• the voltage difference between the anode and the cathode in the electrolytic cell is maintained at less than 1.6 volt,
• the anode comprises at most 98.0%wt of copper,
• the anode comprises less than 1.00%wt of iron,
• the current density through the cell is at least 180 A/m² of cathode surface,
• electrolyte is removed from the electrorefining cell during the electrorefining operation at an average electrolyte refreshing rate of at least 30 % and at most 1900 % per hour, and the electrolyte is removed at least partly by overflow of a first stream of electrolyte over at least one cell wall, and
• a gas is introduced into the cell and bubbled through the electrolyte in between the anode and the cathode.

2. The process according to claim 1 wherein at least part of the anode slimes in the cell are removed from the cell with the first stream of electrolyte.

3. The process according to any one of the preceding claims wherein the first stream of electrolyte is passed through at least one settler providing a sufficiently high residence time at a sufficiently low liquid velocity for anode slime to settle on the bottom of the settler.

4. The process according to claim 3 wherein a third stream of electrolyte containing anode slimes is removed from the bottom of the settler.

5. The process according to any one of the preceding claims wherein a second stream of electrolyte containing anode slimes is removed from the bottom of the at least one electrolytic cell.

6. The process according to any one of the preceding claims comprising the recycle to the electrolytic cell of electrolyte that has been removed from the cell.

7. The process according to the preceding claim, comprising the removal of an electrolyte bleed stream from the electrolyte recycle.

8. The process according to any one of the preceding claims wherein extra copper cations are introduced into the electrolyte in the electrolytic cell.

9. The process according to any one of the preceding claims wherein the gas that is introduced into the cell is air.

10. The process according to any one of the preceding claims wherein the gas is introduced into the cell through a gas diffuser provided below the electrodes but above the space which is provided in the cell bottom for collecting the anode slimes layer, preferably the gas diffuser comprising selectively perforated diffuser pipes connected to the gas supply pipe.

11. The process according to any one of the preceding claims wherein the anode composition complies with at least one and preferably all of the following conditions:
• comprising nickel in the range of 0.25%wt to 10.0%wt,
• comprising lead in the range of 0.25%wt to 6.00%wt,
• comprising tin in the range of 0.25%wt to 6.00%wt,
• comprising antimony in the range of 0.10%wt to 3.00%wt,
• comprising bismuth in the range of 0.010%wt to 0.50%wt,
• comprising at least 0.0001%wt of iron,
• comprising zinc in the range of 0.0010%wt to 0.50%wt,
• comprising arsenic in the range of 0.005%wt to 0.40%wt,
• comprising silver in the range of 0.0001%wt to 0.50%wt, and
• comprising oxygen in the range of 5 ppm wt to 500 ppm wt.

12. The process according to any one of the preceding claims wherein the anode is made from the molten liquid metal composition according to any one of claims 14-15

13. The process according to any one of the preceding claims wherein the electrolyte composition complies with at least one and preferably all of the following conditions:
• copper in the range of 20 to 55 grams/litre,
• nickel in the range of 25 to 90 grams/litre,
• sulphuric acid in the range of 130 to 200 grams/litre,
• tin in the range of 0.4 to 1.4 grams/litre, and
• arsenic in the range of 10 to 200 milligrams/litre.

14. A molten liquid metal composition which after reducing the oxygen content of the composition is suitable for casting anodes for copper anode electrorefining in the process according to any one of the preceding claims and comprising at least 90.10%wt and at most 97%wt of copper, the balance being other elements as impurities as part of which the molten liquid metal composition comprises
• at least 0.1 %wt of nickel,
• at least 0.0001%wt and less than 1.00%wt of iron, and
• at least 250 ppm wt and at most 3000 ppm wt of oxygen.

15. The molten liquid metal composition according to the preceding claim further comprising, as part of the impurities, at least one and more preferably all of the following elements at a level which complies with the respective limit as specified for each element:
• at least 0.10%wt and at most 3.00%wt of antimony,
• at least 0.010%wt and at most 0.50%wt of bismuth,
• at most 6.00%wt of tin,
• at most 6.00%wt of lead,
• at least 0.0001%wt and at most 0.50%wt of silver,
• at least 0.005%wt and at most 0.40%wt of arsenic,
• at least 0.001%wt and at most 0.100%wt of sulphur, and
• at most 0.50%wt of zinc.

## Patentansprüche

1. Ein Verfahren zur Herstellung von Kupfer, welches die Elektroraffination von Kupfermetall in einer Elektrolytzelle von zumindest einer Kupferanode in zumindest eine Kupferkathode umfasst, wobei ein Elektrolyt verwendet wird, das auf Schwefelsäure basiert, **dadurch gekennzeichnet, dass**
• die Spannungsdifferenz zwischen der Anode und der Kathode in der Elektrolytzelle auf weniger als 1,6 Volt gehalten wird,
• die Anode höchstens 98,0 Gew.-% Kupfer umfasst,
• die Anode weniger als 1,00 Gew.-% Eisen umfasst,
• die Stromdichte durch die Zelle mindestens 180 A/m² Kathodenoberfläche beträgt,
• Elektrolyt aus der Elektroraffinationszelle während des Elektroraffinationsvorgangs bei einer durchschnittlichen Elektrolyterneuerungsrate von mindestens 30 % und höchstens 1.900 % pro Stunde entfernt wird, und dadurch, dass das Elektrolyt zumindest teilweise durch Überlauf eines ersten Stroms von Elektrolyt über zumindest eine Zellenwand entfernt wird, und
• ein Gas in die Zelle eingeleitet wird und zwischen der Anode und der Kathode durch das Elektrolyt geperlt wird.

2. Das Verfahren nach Anspruch 1, wobei zumindest ein Teil der Anodenschlämme in der Zelle mit dem ersten Strom von Elektrolyt aus der Zelle entfernt wird.

3. Das Verfahren nach irgendeinem der vorigen Ansprüche, wobei der erste Strom von Elektrolyt durch zumindest einen Abscheider geführt wird, der eine ausreichend lange Verweildauer bei einer ausreichend geringen Flüssigkeitsgeschwindigkeit bietet, damit sich der Anodenschlamm am Boden des Abscheiders absetzen kann.

4. Das Verfahren nach Anspruch 3, wobei ein dritter Strom von Elektrolyt, welcher Anodenschlämme enthält, vom Boden des Abscheiders entfernt wird.

5. Das Verfahren nach irgendeinem der vorigen Ansprüche, wobei ein zweiter Strom von Elektrolyt, welcher Anodenschlämme enthält, vom Boden der zumindest einen Elektrolytzelle entfernt wird.

6. Das Verfahren nach irgendeinem der vorigen Ansprüche, welches die Rückführung zur Elektrolytzelle von Elektrolyt, das aus der Zelle entfernt wurde, umfasst.

7. Das Verfahren nach dem vorigen Anspruch, welches die Entfernung eines Elektrolytentnahmestroms aus dem Rückführelektrolyt umfasst.

8. Das Verfahren nach irgendeinem der vorigen Ansprüche, wobei extra Kupferkationen in das Elektrolyt in der Elektrolytzelle eingebracht werden.

9. Das Verfahren nach irgendeinem der vorigen Ansprüche, wobei das Gas, das in die Zelle eingeleitet wird, Luft ist.

10. Das Verfahren nach irgendeinem der vorigen Ansprüche, wobei das Gas durch einen Gasdiffusor, bereitgestellt unter den Elektroden, aber über dem Raum, der im Zellenboden zum Sammeln der Anodenschlammschicht vorgesehen ist, in die Zelle eingeleitet wird, wobei der Gasdiffusor bevorzugt selektiv perforierte Diffusorrohre umfasst, die an die Gaszuleitung angeschlossen sind.

11. Das Verfahren nach irgendeinem der vorigen Ansprüche, wobei die Anodenzusammensetzung mindestens eine und bevorzugt alle der folgenden Bedingungen erfüllt:
• umfasst Nickel im Bereich von 0,25 Gew.-% bis 10,0 Gew.-%,
• umfasst Blei im Bereich von 0,25 Gew.-% bis 6,00 Gew.-%,
• umfasst Zinn im Bereich von 0,25 Gew.-% bis 6,00 Gew.-%,
• umfasst Antimon im Bereich von 0,10 Gew.-% bis 3,00 Gew.-%,
• umfasst Bismut im Bereich von 0,010 Gew.-% bis 0,50 Gew.-%,
• umfasst mindestens 0,0001 Gew.-% Eisen,
• umfasst Zink im Bereich von 0,0010 Gew.-% bis 0,50 Gew.-%,
• umfasst Arsen im Bereich von 0,005 Gew.-% bis 0,40 Gew.-%,
• umfasst Silber im Bereich von 0,0001 Gew.-% bis 0,50 Gew.-%, und
• umfasst Sauerstoff im Bereich von 5 Gew.-ppm bis 500 Gew.-ppm.

12. Das Verfahren nach irgendeinem der vorigen Ansprüche, wobei die Anode aus der geschmolzenen flüssigen Metallzusammensetzung nach irgendeinem der Ansprüche 14 bis 15 hergestellt ist.

13. Das Verfahren nach irgendeinem der vorigen Ansprüche, wobei die Elektrolytzusammensetzung mindestens eine und bevorzugt alle der folgenden Bedingungen erfüllt:
• Kupfer im Bereich von 20 bis 55 Gramm/Liter,
• Nickel im Bereich von 25 bis 90 Gramm/Liter,
• Schwefelsäure im Bereich von 130 bis 200 Gramm/Liter,
• Zinn im Bereich von 0,4 bis 1,4 Gramm/Liter, und
• Arsen im Bereich von 10 bis 200 Milligramm/Liter.

14. Eine geschmolzene flüssige Metallzusammensetzung, die, nach Senken des Sauerstoffgehalts der Zusammensetzung, zum Gießen von Anoden für Kupferanoden-Elektroraffination im Verfahren nach irgendeinem der vorigen Ansprüche geeignet ist und mindestens 90,10 Gew.-% und höchstens 97 Gew.-% Kupfer umfasst, wobei der Rest andere Elemente als Verunreinigungen ist, als deren Anteil die geschmolzene flüssige Metallzusammensetzung
• mindestens 0,1 Gew.-% Nickel,
• mindestens 0,0001 Gew.-% und weniger als 1,00 Gew.-% Eisen, und
• mindestens 250 Gew.-ppm und höchstens 3.000 Gew.-ppm Sauerstoff umfasst.

15. Die geschmolzene flüssige Metallzusammensetzung nach dem vorigen Anspruch, ferner umfassend, als Teil der Verunreinigungen, zumindest eines und noch besser alle der folgenden Elemente auf einem Niveau, das die zugehörige Grenze, wie festgelegt für jedes Element, einhält:
• mindestens 0,10 Gew.-% und höchstens 3,00 Gew.-% Antimon,
• mindestens 0,010 Gew.-% und höchstens 0,50 Gew.-% Bismut,
• höchstens 6,00 Gew.-% Zinn,
• höchstens 6,00 Gew.-% Blei,
• mindestens 0,0001 Gew.-% und höchstens 0,50 Gew.-% Silber,
• mindestens 0,005 Gew.-% und höchstens 0,40 Gew.-% Arsen,
• mindestens 0,001 Gew.-% und höchstens 0,100 Gew.-% Schwefel, und
• höchstens 0,50 Gew.-% Zink.

## Revendications

1. Procédé de production de cuivre comprenant l'électroraffinage du cuivre métallique dans une cellule électrolytique d'au moins une anode en cuivre dans au moins une cathode en cuivre, en utilisant un électrolyte à base d'acide sulfurique, **caractérisé en ce que**
- la différence de tension entre l'anode et la cathode dans la cellule électrolytique est maintenue à moins de 1,6 volts,
- l'anode comprend au maximum 98,0 % en poids de cuivre,
- l'anode comprend moins de 1,00 % en poids de fer,
- la densité de courant dans la cellule est d'au moins 180 A/m² de la surface cathodique,
- l'électrolyte est retiré de la cellule d'électroraffinage pendant l'opération d'électroraffinage à un taux de rafraîchissement moyen de l'électrolyte d'au moins 30 % et de maximum 1900 % par heure, et l'électrolyte est retiré au moins partiellement par débordement d'un premier courant d'électrolyte sur au moins une paroi cellulaire, et
- un gaz est introduit dans la cellule et mis en bulles à travers l'électrolyte entre l'anode et la cathode.

2. Procédé selon la revendication 1 dans lequel au moins une partie des boues anodiques dans la cellule sont retirées de la cellule avec le premier courant d'électrolyte.

3. Procédé selon l'une quelconque des revendications précédentes dans lequel le premier courant d'électrolyte est passé à travers au moins un décanteur fournissant un temps de séjour suffisamment élevé à une vitesse de liquide suffisamment faible pour que la boue anodique se dépose sur le fond du décanteur.

4. Procédé selon la revendication 3 dans lequel un troisième courant d'électrolyte contenant des boues anodiques est retiré du fond du décanteur.

5. Procédé selon l'une quelconque des revendications précédentes dans lequel un deuxième courant d'électrolyte contenant des boues anodiques est retiré du fond de l'au moins une cellule électrolytique.

6. Procédé selon l'une quelconque des revendications précédentes comprenant le recyclage vers la cellule électrolytique de l'électrolyte qui a été retiré de la cellule.

7. Procédé selon la revendication précédente, comprenant le retrait d'un courant de prélèvement d'électrolyte à partir du recyclage de l'électrolyte.

8. Procédé selon l'une quelconque des revendications précédentes dans lequel des cations de cuivre supplémentaires sont introduits dans l'électrolyte de la cellule électrolytique.

9. Procédé selon l'une quelconque des revendications précédentes dans lequel le gaz qui est introduit dans la cellule est de l'air.

10. Procédé selon l'une quelconque des revendications précédentes dans lequel le gaz est introduit dans la cellule par un diffuseur de gaz fourni en dessous des électrodes, mais au-dessus de l'espace qui est fourni dans le fond de la cellule pour recueillir la couche de boues anodiques, de préférence le diffuseur de gaz comprenant des tuyaux de diffusion sélectivement perforés reliés au tuyau d'alimentation en gaz.

11. Procédé selon l'une quelconque des revendications précédentes dans lequel la composition anodique satisfait à au moins l'une et de préférence toutes les conditions suivantes :
- comprenant une quantité de nickel située dans la plage allant de 0,25 % en poids à 10,0 % en poids,
- comprenant une quantité de plomb située dans la plage allant de 0,25 % en poids à 6,00 % en poids,
- comprenant une quantité d'étain située dans la plage allant de 0,25 % en poids à 6,00 % en poids,
- comprenant une quantité d'antimoine située dans la plage allant de 0,10 % en poids à 3,00 % en poids,
- comprenant une quantité de bismuth située dans la plage allant de 0,010 % en poids à 0,50 % en poids,
- comprenant au moins 0,0001 % en poids de fer,
- comprenant une quantité de zinc située dans la plage allant de 0,0010 % en poids à 0,50 % en poids,
- comprenant une quantité d'arsenic située dans la plage allant de 0,005 % en poids à 0,40 % en poids,
- comprenant une quantité d'argent située dans la plage allant de 0,0001 % en poids à 0,50 % en poids, et
- comprenant une quantité d'oxygène située dans la plage allant de 5 ppm en poids à 500 ppm en poids.

12. Procédé selon l'une quelconque des revendications précédentes dans lequel l'anode est fabriquée à partir de la composition métallique liquide en fusion selon l'une quelconque des revendications 14-15.

13. Procédé selon l'une quelconque des revendications précédentes dans lequel la composition d'électrolyte satisfait à au moins l'une et de préférence toutes les conditions suivantes :
- une quantité de cuivre située dans la plage allant de 20 à 55 grammes/litre,
- une quantité de nickel située dans la plage allant de 25 à 90 grammes/litre,
- une quantité d'acide sulfurique située dans la plage allant de 130 à 200 grammes/litre,
- une quantité d'étain située dans la plage allant de 0,4 à 1,4 grammes/litre, et
- une quantité d'arsenic située dans la plage allant de 10 à 200 grammes/litre.

14. Composition métallique liquide en fusion qui après réduction de la teneur en oxygène de la composition convient pour couler des anodes pour l'électroraffinage par anode de cuivre dans le procédé selon l'une quelconque des revendications précédentes et comprenant au moins 90,10 % en poids et au maximum 97 % en poids de cuivre, le reste étant constitué d'autres éléments comme impuretés en tant que partie desquelles la composition métallique liquide en fusion comprend
- au moins 0,1 % en poids de nickel,
- au moins 0,0001% en poids et moins de 1,00 % en poids de fer, et
- au moins 250 ppm en poids et au maximum 3000 ppm en poids d'oxygène.

15. Composition métallique liquide en fusion selon la revendication précédente comprenant en outre, en tant que partie des impuretés, au moins l'un et plus préférentiellement tous les éléments suivants à un taux conforme à la limite respective comme précisé pour chaque élément :
- au moins 0,10 % en poids et au maximum 3,00 % en poids d'antimoine,
- au moins 0,010 % en poids et au maximum 0,50 % en poids de bismuth,
- au maximum 6,00 % en poids d'étain,
- au maximum 6,00 % en poids de plomb,
- au moins 0,0001 % en poids et au maximum 0,50 % en poids d'argent,
- au moins 0,005 % en poids et au maximum 0,40 % en poids d'arsenic,
- au moins 0,001 % en poids et au maximum 0,100 % en poids de soufre, et
- au maximum 0,50 % en poids de zinc.
